# EUROPEAN PATENT APPLICATION

(11) **EP 4 718 585 A1**
(43) Date of publication of application: **01.04.2026**
(21) Application number: 23939247.5
(22) Date of filing: 30.10.2023
(51) Int. Cl.: H01M 10/615, H01M 10/657, H01M 10/667, H02J 7/00

(54) **CHARGE AND DISCHARGE CONTROL METHOD AND APPARATUS, AND DEVICE, STORAGE MEDIUM AND PROGRAM PRODUCT**

(30) Priority: 29.05.2023 CN 202310618049
(71) Applicant: Contemporary Amperex Technology Co., Limited, Ningde, Fujian 352100 (CN)
(72) Inventor: WU, Kai, Ningde, Fujian 352100 (CN); CHEN, Wei, Ningde, Fujian 352100 (CN); HUANG, Xiaojian, Ningde, Fujian 352100 (CN); CHEN, Xing, Ningde, Fujian 352100 (CN); YAN, Yu, Ningde, Fujian 352100 (CN); PAN, Xianxi, Ningde, Fujian 352100 (CN)
(74) Representative: Ziebig Hengelhaupt Intellectual Property Attorneys Patentanwaltskanzlei PartGmbB
(86) International application number: PCT/CN2023/127794
(87) International publication number: WO 2024/244276

(57) **Abstract**

Disclosed in the present application are a charge and discharge control method and apparatus, and a device, a storage medium and a program product. The method comprises: when a battery heating condition is satisfied, turning on a connecting circuit between a neutral point of a first electric motor and a neutral point of a second electric motor, wherein a first electric motor controller connected to the first electric motor and a second electric motor controller connected to the second electric motor are both connected between a positive electrode and a negative electrode of a battery; and controlling the turning-on/turning-off of bridge arms in the first electric motor controller and the second electric motor controller, and forming, in a circuit in which the battery is located, a charging loop and a discharging loop which are alternately switched. In the present application, the total inductance of windings in an access loop can increase, such that the electric quantity storage capability is improved, which is conducive to the improvement of the battery heating efficiency. A freewheel loop is added following a discharge loop, such that the peak current is reduced, the electric motor noise is reduced, and the overcurrent damage of a device is reduced. In a solution where all windings of the same electric motor have the same current direction, rotor heating situations can be reduced.

## Description

### CROSS-REFERENCE TO RELATED APPLICATION

The present application claims priority to Chinese Patent Application No. 202310618049.2 filed on May 29, 2023 and entitled "CHARGE AND DISCHARGE CONTROL METHOD AND APPARATUS, AND DEVICE, STORAGE MEDIUM AND PROGRAM PRODUCT", the content of which is incorporated herein by reference in its entirety.

### TECHNICAL FIELD

The present application relates to the technical field of batteries, and in particular, to a charge and discharge control method and apparatus, devices, a storage medium, and a program product.

### BACKGROUND

In low-temperature environments, the discharge capacity of a power battery significantly deteriorates, and it is difficult to charge the battery. Therefore, to enable normal use of the power battery, heating is required for the power battery in low-temperature environments.

In the circuit architecture involving dual-motor drive in the related art, the two motors are connected in parallel, and when battery heating is required, a charging loop and a discharging loop are alternately formed between the battery and the one-phase or multi-phase windings of the motor by controlling the switching of a bridge arm in a motor controller connected to one of the motors, such that an alternating current flowing through the battery is generated. As a result, the internal resistance of the battery generates heat, thereby achieving the effect of battery heating.

However, in the related art, charging and discharging are performed between the one-phase or multi-phase windings of one motor and a battery, and the maximum electrical energy storage capacity of the windings participating in the charging and discharging is not high, resulting in low temperature rise efficiency during battery heating.

The above statements are only used to provide background information related to the present application and do not necessarily constitute the prior art.

### SUMMARY

In view of the issue of low temperature rise efficiency during battery heating in the prior art described above, the present application provides a charge and discharge control method and apparatus, devices, a storage medium, and a program product. During battery heating process, the first motor and the second motor can be connected in series, enabling more windings to participate in the battery heating process, thereby improving the temperature rise efficiency during battery heating.

According to a first aspect of embodiments of the present application, provided is a charge and discharge control method, including:
when a battery heating condition is satisfied, activating a connection circuit between a neutral point of a first motor and a neutral point of a second motor, where a first motor controller connected to the first motor and a second motor controller connected to the second motor are both connected between a positive terminal and a negative terminal of a battery; and
controlling switching of bridge arms in the first motor controller and the second motor controller to form a charging loop and a discharging loop that are alternately switched in a circuit where the battery is located.

When battery heating is required, the connection circuit between the neutral point of the first motor and the neutral point of the second motor is activated, enabling flexible switching between driving mode and battery heating mode through a switch in the connection circuit. By controlling the switching of the bridge arms in the first motor controller and the second motor controller, windings in the first motor and the second motor can be connected in series and incorporated into the formed discharging loop or charging loop, such that the total inductance of the windings incorporated into the loop is increased, thereby increasing the electrical energy stored in the windings incorporated into the discharging loop. The stored electrical energy is then fed back into the battery via the charging loop. The alternate switching between the discharging loop and the charging loop allows the battery to generate more heat within a unit time, thereby effectively improving battery heating efficiency. Additionally, only a connection circuit between the neutral points of the two motors is added to the circuit structure, enabling a substantial increase in the temperature rise efficiency during battery heating at a low cost.

In some embodiments of the present application, forming the charging loop and the discharging loop that are alternately switched in the circuit where the battery is located includes:
in the circuit where the battery is located, alternately forming a discharging loop where the battery discharges electrical energy into windings in the first motor and the second motor, and a charging loop where electrical energy from the windings in the first motor and the second motor is fed back into the battery.

At least one winding in the first motor and at least one winding in the second motor are incorporated into the discharging loop or the charging loop, such that the total inductance for storing electrical energy released by the battery in the formed discharging loop or charging loop is increased, thereby improving battery heating efficiency.

In some embodiments of the present application, controlling the switching of the bridge arms in the first motor controller and the second motor controller to form the charging loop and the discharging loop that are alternately switched in the circuit where the battery is located includes:
alternately executing a first discharging mode and a first charging mode to alternately switch between a first discharging loop and a first charging loop in the circuit where the battery is located,
where the first discharging mode and the first charging mode are configured to control the switching of the bridge arms in the first motor controller and the second motor controller; in the first discharging loop and the first charging loop, directions of currents flowing through the battery are opposite, and directions of currents flowing through a neutral line between the first motor and the second motor are the same.

The first discharging mode and the first charging mode are alternately executed to form the first discharging loop and the first charging loop which are alternately switched, thereby generating an oscillating current flowing through the battery. As a result, the internal resistance of the battery generates heat, thereby achieving the effect of battery heating. The first discharging mode and the first charging mode enable convenient and flexible control of the switching of bridge arm switches in the first motor controller and the second motor controller, thereby improving control efficiency.

In some embodiments of the present application, controlling the switching of the bridge arms in the first motor controller and the second motor controller to form the charging loop and the discharging loop that are alternately switched in the circuit where the battery is located includes:
cyclically executing the first discharging mode, the first charging mode, a second discharging mode, and a second charging mode to cyclically switch among the first discharging loop, the first charging loop, a second discharging loop, and a second charging loop in the circuit where the battery is located,
where the second discharging mode and the second charging mode are configured to control the switching of the bridge arms in the first motor controller and the second motor controller; bridge arm switches turned on in the second discharging loop are bridge arm switches turned off in the first discharging loop; directions of currents flowing through the neutral line in the second discharging loop and the first charging loop are opposite; directions of currents flowing through the neutral line in the second charging loop and the first discharging loop are opposite.

In one control cycle of cyclically switching among the first discharging loop, the first charging loop, the second discharging loop, and the second charging loop, the number of switching operations on individual switches in the first motor controller and the second motor controller can be balanced, which is beneficial for maintaining a uniform service life of the switches in the respective motor controllers and reducing the risk of damage to individual switches due to a relatively large number of switching operations. Since the directions of currents flowing through the neutral line between the first motor and the second motor in the first charging loop and the second discharging loop are opposite, in the second discharging loop, a current path returning from the neutral line to the positive terminal of the battery along the current direction at the neutral line in the first charging loop exists. Therefore, if the current stored in the windings is not fully released when switching to the second discharging loop, the circuit structure of the second discharging loop allows the current to continue flowing in the same direction, enabling the windings to continue discharging until the discharge of the windings is completed, after which the current direction is reversed due to the change in potential to initiate the process of the second discharging loop. In this way, the windings are not charged when the electrical energy of the windings is not fully released, thereby reducing the occurrence of current backflow into the windings. Similarly, when switching from the second charging loop to the first discharging loop, current backflow into the windings is also prevented. Furthermore, during the process of cyclical loop switching, there is no stage where the battery is neither charged nor discharged, thereby improving battery heating efficiency and increasing the temperature rise rate of the battery.

In some embodiments of the present application, executing the first discharging mode to form the first discharging loop in the circuit where the battery is located includes:
controlling an upper bridge arm of at least one first bridge arm in the first motor controller to be turned on, and controlling a lower bridge arm of at least one second bridge arm in the second motor controller to be turned on.

The formed first discharging loop includes the battery, the turned-on upper bridge arm in the first motor controller and a winding in the first motor connected to the turned-on upper bridge arm, and the turned-on lower bridge arm in the second motor controller and a winding in the second motor connected to the turned-on lower bridge arm.

In the first discharging loop formed in the embodiments, the winding in the first motor connected to the turned-on upper bridge arm, the winding in the second motor connected to the turned-on lower bridge arm in the second motor controller, the winding incorporated into the loop in the first motor, and the winding incorporated into the loop in the second motor are connected in series, and the series connection of the windings can increase the total inductance in the formed first discharging loop, thereby enabling storage of a greater amount of electrical energy to improve battery heating efficiency. In embodiments where a plurality of upper bridge arms in the first motor controller are turned on and/or a plurality of lower bridge arms in the second motor controller are turned on, the plurality of turned-on upper bridge arms in the first motor controller are connected in parallel, and the plurality of turned-on lower bridge arms in the second motor controller are connected in parallel. The parallel connection functions to enable current sharing, such that the current flowing through individual upper bridge arms or lower bridge arms is relatively small, which reduces the risk of overcurrent damage to the bridge arm switches, and allows a larger alternating current to be generated in the entire loop to improve the temperature rise efficiency of the battery. Additionally, in embodiments where all upper bridge arms in the first motor controller are turned on, the current in all windings of the first motor flows in the same direction. Alternatively, in embodiments where all lower bridge arms in the second motor controller are turned on, the current in all windings of the second motor flows in the same direction. In these two types of embodiments, the stators of the motors do not generate a rotating magnetic field, which can significantly reduce eddy current losses in the rotors and thus reduce the risk of rotor heating.

In some embodiments of the present application, executing the first charging mode to form the first charging loop in the circuit where the battery is located includes:
controlling both the turned-on upper bridge arm and the turned-on lower bridge arm during execution of the first discharging mode to be turned off, and controlling a lower bridge arm of the at least one first bridge arm and an upper bridge arm of the at least one second bridge arm to be turned on.

The formed first charging loop includes the battery, the turned-on lower bridge arm in the first motor controller and a winding in the first motor connected to the turned-on lower bridge arm, and the turned-on upper bridge arm in the second motor controller and a winding in the second motor connected to the turned-on upper bridge arm.

In the first charging loop formed in the embodiments, the winding in the first motor connected to the turned-on lower bridge arm in the first controller and the winding in the second motor connected to the turned-on upper bridge arm in the second motor controller are connected in series, and the electrical energy in energy-storing windings in the first discharging loop is fed back into the battery. The first charging loop cooperates with the first discharging loop, such that the direction of the current flowing through the battery is changed from flowing from the positive terminal to the negative terminal to flowing from the negative terminal to the positive terminal, thereby forming an alternating current flowing through the battery. As a result, the internal resistance of the battery generates heat, thereby achieving the effect of battery heating.

In some embodiments of the present application, executing the first charging mode to form the first charging loop in the circuit where the battery is located includes:
controlling both the turned-on upper bridge arm and the turned-on lower bridge arm during execution of the first discharging mode to be turned off.

The formed first charging loop includes the battery, a freewheeling diode in the lower bridge arm of the at least one first bridge arm, a winding in the first motor connected to the at least one first bridge arm, a winding in the second motor connected to the at least one second bridge arm, and a freewheeling diode in an upper bridge arm of the at least one second bridge arm.

In forming the first charging loop in the embodiments, the switches in the motor controllers are not required to be turned on, and the freewheeling diodes in the switches are used to form the first charging loop, resulting in a simpler control manner. In the formed first charging loop, the electrical energy in energy-storing windings in the first discharging loop is fed back into the battery, such that the direction of the current flowing through the battery is changed from flowing from the positive terminal to the negative terminal to flowing from the negative terminal to the positive terminal, thereby forming an alternating current flowing through the battery. As a result, the internal resistance of the battery generates heat, thereby achieving the effect of battery heating.

In some embodiments of the present application, executing the first discharging mode to form the first discharging loop in the circuit where the battery is located includes:
controlling an upper bridge arm of at least one first bridge arm in the first motor controller to be turned on, controlling a lower bridge arm of at least one first bridge arm, excluding the first bridge arms whose upper bridge arms are turned on, in the first motor controller, and controlling a lower bridge arm of at least one second bridge arm in the second motor controller to be turned on.

The formed first discharging loop includes a loop among the battery, the turned-on upper bridge arm in the first motor controller and a winding in the first motor connected to the turned-on upper bridge arm, and the turned-on lower bridge arm in the second motor controller and a winding in the second motor connected to the turned-on lower bridge arm, and a loop among the battery, the turned-on upper bridge arm in the first motor controller and a winding connected to the turned-on upper bridge arm, and the turned-on lower bridge arm in the first motor controller and a winding in the first motor connected to the turned-on lower bridge arm.

The first discharging loop formed in the embodiments includes two loops, at least two windings in the first motor and at least one winding in the second motor are incorporated into the first discharging loop, and the windings of the first motor and the winding of the second motor among the incorporated windings are connected in series, which increases the total inductance in the first discharging loop and the total amount of electrical energy stored in the windings in the first discharging loop, thereby improving the heating rate of the battery. When a plurality of upper bridge arms and/or a plurality of lower bridge arms are turned on in the first motor controller, and/or a plurality of lower bridge arms are turned on in the second motor controller, a plurality of bridge arm switches may be connected in parallel in the first discharging loop. The parallel connection of the switches allows current sharing, such that the current flowing through individual switches is reduced, thereby lowering the risk of overcurrent damage to the switches and reducing the restriction of the current-carrying capability of the switches on the heating current. As a result, a larger heating current is allowed to be generated in the first discharging loop without causing overcurrent in individual switches.

In some embodiments of the present application, executing the first charging mode to form the first charging loop in the circuit where the battery is located includes:
for the bridge arm where the turned-on upper bridge arm in the first motor controller during execution of the first discharging mode is located, controlling the upper bridge arm to be turned off and the lower bridge arm to be turned on; for the bridge arm where the turned-on lower bridge arm in the first motor controller during execution of the first discharging mode is located, controlling the lower bridge arm to be turned off and the upper bridge arm to be turned on; and for the bridge arm where the turned-on lower bridge arm during execution of the first discharging mode controlled by the second motor is located, controlling the lower bridge arm to be turned off and the upper bridge arm to be turned on.

The formed first charging loop includes a loop among the battery, the turned-on lower bridge arm in the first motor controller and a winding in the first motor connected to the turned-on lower bridge arm, and the turned-on upper bridge arm in the second motor controller and a winding in the second motor connected to the turned-on upper bridge arm, and a loop among the battery, the turned-on lower bridge arm in the first motor controller and a winding in the first motor connected to the turned-on lower bridge arm, and the turned-on upper bridge arm in the first motor controller and a winding in the first motor connected to the turned-on upper bridge arm.

In the embodiments, by controlling the switching of the bridge arm switches in the first motor controller and the second motor control, the electrical energy in energy-storing windings in the first discharging loop is fed back into the battery, and the first charging loop and the first discharging loop together result in an alternating current flowing through the battery. As a result, the internal resistance of the battery generates heat, thereby achieving the effect of battery heating. Furthermore, all the turned-on switches in the first charging loop are the turned-off switches in the bridge arms where the turned-on switches in the first discharging loop are located, such that in one charge-discharge cycle composed of the first discharging loop and the first charging loop, the upper bridge arm and the lower bridge arm of the same bridge arm are used at the same frequency, thereby reducing the risk of damage to the more frequently used switches in the same bridge arm due to difference in switching frequency among the switches of the same bridge arm.

In some embodiments of the present application, executing the first charging mode to form the first charging loop in the circuit where the battery is located includes:
controlling all the turned-on upper bridge arms and the turned-on lower bridge arms during execution of the first discharging mode to be turned off.

The formed first charging loop includes the battery, a freewheeling diode of the lower bridge arm in the bridge arm where the turned-on upper bridge arm in the first discharging mode is located, a freewheeling diode of the upper bridge arm in the bridge arm where the turned-on lower bridge arm in the first discharging mode is located, and windings in the first motor and the second motor connected to the bridge arms to which the freewheeling diodes belong.

In forming the first charging loop in the embodiments, the switches in the motor controllers are not required to be turned on, and the freewheeling diodes in the switches are used to form the first charging loop, resulting in a simpler control manner. In the formed first charging loop, the electrical energy stored in the windings is fed back into the battery, such that the direction of the current flowing through the battery is changed from flowing from the positive terminal to the negative terminal to flowing from the negative terminal to the positive terminal, thereby forming an alternating current flowing through the battery. As a result, the internal resistance of the battery generates heat, thereby achieving the effect of battery heating.

In some embodiments of the present application, forming the charging loop and the discharging loop that are alternately switched in the circuit where the battery is located further includes:
forming the discharging loop, a freewheeling loop, and the charging loop that are alternately switched in the circuit where the battery is located, where the freewheeling loop includes a winding of the first motor incorporated into the discharging loop and a winding of the second motor incorporated into the discharging loop.

After the battery fully discharges electrical energy into the windings of the motors in the discharging loop, a freewheeling loop between the windings of the two motors is formed. By allowing the current to freewheel, a relatively small amount of electrical energy is consumed, thereby achieving the effect of reducing the peak current value of the alternating current.

In some embodiments of the present application, forming the freewheeling loop in the circuit where the battery is located includes:
controlling at least one of the currently turned-on bridge arm switches in the first motor controller and the second motor controller to be turned off to form the freewheeling loop between the winding of the first motor incorporated into the discharging loop and the winding of the second motor incorporated into the discharging loop, where in the freewheeling loop and the discharging loop, directions of currents flowing through the neutral line between the first motor and the second motor are the same.

After the freewheeling loop is formed, the current continuously flows back and forth between the winding of the first motor incorporated into the loop and the winding of the second motor incorporated into the loop. Since the current cyclically flows through the components in the freewheeling loop, a certain degree of electrical energy loss occurs in each component, thereby resulting in a slight decrease in the electrical energy stored in the windings incorporated into the loop, and achieving the effect of reducing the peak current value of the alternating current generated during the charging and discharging process. In one aspect, reducing the peak current value can further reduce overcurrent damage to the components in the loop, and in another aspect, can mitigate the occurrence of excessive noise produced by the first motor and/or the second motor due to a high rate of magnetic field change resulting from excessive peak current.

In some embodiments of the present application, controlling the switching of the bridge arms in the first motor controller and the second motor controller to form a discharging loop in the circuit where the battery is located includes:
controlling the upper bridge arms of all bridge arms in the first motor controller to be turned on, and controlling the lower bridge arms of all bridge arms in the second motor controller to be turned on, where the formed discharging loop includes the battery, the upper bridge arms of all bridge arms in the first motor controller, all windings of the first motor, all windings of the second motor, and the lower bridge arms of all bridge arms in the second motor controller.

In the discharging loop formed in this way, all windings of the first motor and the second motor are incorporated into the discharging loop, and the windings of the first motor and the windings of the second motor are connected in series, such that the total inductance in the discharging loop is extremely large, and more electrical energy can be stored in the discharging loop, thereby improving the heating rate of the battery. Furthermore, all bridge arm switches involved in the first motor controller are connected in parallel, and all bridge arm switches involved in the second motor controller are also connected in parallel. The parallel connection enables current sharing, such that the current flowing through individual switches is relatively small, thereby lowering the risk of overcurrent damage to the switches, and allows a larger alternating current to be generated in the entire loop to improve the temperature rise efficiency of the battery. In the embodiments, the current flowing through all windings of the first motor flows in the same direction. Therefore, the stator does not generate a rotating magnetic field, which can significantly reduce eddy current losses in the rotor and thus effectively reduce the risk of rotor heating.

In some embodiments of the present application, the method further includes:
when charging of all windings of the first motor and all windings of the second motor by the battery in the discharging loop is completed, controlling all upper bridge arms of the first motor controller and all upper bridge arms of the second motor controller to be turned on to form a freewheeling loop among all upper bridge arms of the first motor controller, all windings of the first motor, all windings of the second motor, and all upper bridge arms of the second motor controller.

In the formed freewheeling loop described above, the current cyclically flows within the freewheeling loop. Since the switches and windings incorporated into the freewheeling loop inevitably have certain resistance values, electrical energy losses occur during the circulation of current among these components, resulting in a decrease in the total electrical energy stored in all windings of the first motor and all windings of the second motor, thereby reducing the peak current value of the alternating current generated during charging and discharging. Then, the noise of the motors during the battery heating process is mitigated, and the risk of overcurrent damage to the components is reduced.

In some embodiments of the present application, the method further includes:
when charging of all windings of the first motor and all windings of the second motor by the battery in the discharging loop is completed, controlling all lower bridge arms of the first motor controller and all lower bridge arms of the second motor controller to be turned on to form a freewheeling loop among all lower bridge arms of the first motor controller, all windings of the first motor, all windings of the second motor, and all lower bridge arms of the second motor controller.

The embodiments provide another control manner for switching to the freewheeling loop, thereby diversifying the control manners for switching from the first discharging loop to the freewheeling loop. The formed freewheeling loop results in a decrease in the total electrical energy stored in all windings of the first motor and all windings of the second motor, thereby reducing the peak current value of the alternating current generated during charging and discharging. Then, the noise of the motors during the battery heating process is mitigated, and the risk of overcurrent damage to the components is reduced.

In some embodiments of the present application, controlling the switching of the bridge arms in the first motor controller and the second motor controller to form the charging loop in the circuit where the battery is located includes:
when freewheeling in the freewheeling loop ends, controlling the upper bridge arms of all bridge arms in the first motor controller to be turned off and the lower bridge arms of all the bridge arms to be turned on, and controlling the lower bridge arms of all bridge arms in the second motor controller to be turned off and the upper bridge arms of all the bridge arms to be turned on, where the formed charging loop includes the battery, the lower bridge arms of all bridge arms in the first motor controller, all windings of the first motor, all windings of the second motor, and the upper bridge arms of all bridge arms in the second motor controller.

By switching from the freewheeling loop to the charging loop after freewheeling, the total electrical energy in all windings at the starting point of discharging through the windings in the charging loop is not excessively high, such that the peak current value is not excessively high, thereby reducing the risk of overcurrent damage to the components in the loop, and reducing the noise of the motors during the charging and discharging process. In the charging loop, the current flowing through all windings of the first motor flows in the same direction. Therefore, the stator does not generate a rotating magnetic field, which can significantly reduce eddy current losses in the rotor and thus effectively reduce the risk of rotor heating.

In some embodiments of the present application, controlling the switching of the bridge arms in the first motor controller and the second motor controller to form the charging loop in the circuit where the battery is located includes:
when freewheeling in the freewheeling loop ends, controlling the upper bridge arms of all bridge arms in the first motor controller to be turned off, and controlling the lower bridge arms of all bridge arms in the second motor controller to be turned off, where the formed charging loop includes the battery, freewheeling diodes of the lower bridge arms of all bridge arms in the first motor controller, all windings of the first motor, all windings of the second motor, and freewheeling diodes of the upper bridge arms of all bridge arms in the second motor controller.

By forming the charging loop in this manner, the freewheeling diodes in the switches of the motor controllers are fully utilized. The turned-on switches in the freewheeling loop are turned off, and no additional switches are turned on, resulting in a simpler and more efficient control manner that reduces the number of switching operations and can extend the service life of the switches. In the charging loop, the current flowing through all windings of the first motor flows in the same direction. Therefore, the stator does not generate a rotating magnetic field, which can significantly reduce eddy current losses in the rotor and thus effectively reduce the risk of rotor heating.

In some embodiments of the present application, the method further includes:
when a heating stop condition is satisfied, controlling the connection circuit between the neutral point of the first motor and the neutral point of the second motor to be disabled.

By disabling the connection circuit between the neutral point of the first motor and the neutral point of the second motor, the battery heating mode can be stopped, and the first motor and the second motor can be restored to a parallel configuration. The control manner is simple and allows for rapid switching between series and parallel connections of the first motor and the second motor, thereby reducing the delay in using the device by the user due to battery heating. In the event of a component fault in the circuit, the charging and discharging loops can also be promptly disabled to prevent damage to other components in the circuit.

According to a second aspect of the embodiments of the present application, provided is a charge and discharge control apparatus, including:
a control module, configured to, when a battery heating condition is satisfied, activate a connection circuit between a neutral point of a first motor and a neutral point of a second motor, where a first motor controller connected to the first motor and a second motor controller connected to the second motor are both connected between a positive terminal and a negative terminal of a battery; and control switching of bridge arms in the first motor controller and the second motor controller to form a charging loop and a discharging loop that are alternately switched in a circuit where the battery is located.

According to a third aspect of the embodiments of the present application, provided is an electric device, including a battery, a first motor, a second motor, a first motor controller, a second motor controller, a connection circuit, and the charge and discharge control apparatus according to the second aspect.

The first motor controller and the second motor controller are connected in parallel between a positive terminal and a negative terminal of the battery.

Connection points of the upper and lower bridge arms of each bridge arm of the first motor controller are respectively connected to the windings of the first motor in a one-to-one correspondence manner, connection points of the upper and lower bridge arms of each bridge arm of the second motor controller are respectively connected to the windings of the second motor in a one-to-one correspondence manner, and the connection circuit is connected between a neutral point of the first motor and a neutral point of the second motor.

The charge and discharge control apparatus is connected to the connection circuit, the first motor controller, and the second motor controller.

According to a fourth aspect of the embodiments of the present application, provided is a computing device, including a memory, a processor, and a computer program stored in the memory and executable by the processor. The processor executes the program to implement the method according to the first aspect described above.

According to a fifth aspect of the embodiments of the present application, provided is a computer-readable storage medium having a computer program stored thereon. The program, when executed by a processor, causes the processor to implement the method according to the first aspect described above.

According to a sixth aspect of the embodiments of the present application, provided is a computer program product, including a computer program. The computer program, when executed by a processor, causes the processor to implement the method according to the first aspect described above.

The above description is only an overview of the technical solutions of the embodiments of the present application. To more clearly understand the technical means of the embodiments of the present application to enable implementation in accordance with the content of the specification and to make the above and other purposes, features, and advantages of the embodiments of the present application more obvious and easy to understand, the detailed description of the present application is provided below.

### BRIEF DESCRIPTION OF THE DRAWINGS

By reading the detailed description of the implementations below, various additional advantages and benefits will become clear to those of ordinary skill in the art. The drawings are provided solely for the purpose of illustrating the implementations of the present application and shall not be construed as limiting the scope of the present application. Furthermore, the same reference numerals in all the drawings denote identical components. In the drawings:
FIG. 1 is a schematic diagram of a charging and discharging circuit of a battery heating system according to the related art;
FIG. 2 is a schematic diagram of a charging and discharging circuit according to one or more embodiments of the present application;
FIG. 3 is a schematic structural diagram of a vehicle according to one or more embodiments of the present application;
FIG. 4 is a flowchart of a charge and discharge control method according to one or more embodiments of the present application;
FIG. 5 is a schematic diagram of a current flow direction of a first discharging loop according to one or more embodiments of the present application;
FIG. 6 is a schematic diagram of a current flow direction of a first charging loop according to one or more embodiments of the present application;
FIG. 7 is a schematic diagram of another current flow direction of a first charging loop according to one or more embodiments of the present application;
FIG. 8 is a schematic diagram of a current flow direction of another first discharging loop according to one or more embodiments of the present application;
FIG. 9 is a schematic diagram of a current flow direction of a first charging loop according to one or more embodiments of the present application;
FIG. 10 is a schematic diagram of another current flow direction of a first charging loop according to one or more embodiments of the present application;
FIG. 11 is a schematic diagram of a current flow direction of another first discharging loop according to one or more embodiments of the present application;
FIG. 12 is a schematic diagram of a current flow direction of a first charging loop according to one or more embodiments of the present application;
FIG. 13 is a schematic diagram of another current flow direction of a first charging loop according to one or more embodiments of the present application;
FIG. 14 is a schematic diagram of a current flow direction of another first discharging loop according to one or more embodiments of the present application;
FIG. 15 is a schematic diagram of a current flow direction of a first charging loop according to one or more embodiments of the present application;
FIG. 16 is a schematic diagram of another current flow direction of a first charging loop according to one or more embodiments of the present application;
FIG. 17 is a schematic diagram of a current flow direction of a freewheeling loop according to one or more embodiments of the present application;
FIG. 18 is a schematic diagram of a current flow direction of another freewheeling loop according to one or more embodiments of the present application;
FIG. 19 is a schematic diagram of a current flow direction of still another freewheeling loop according to one or more embodiments of the present application;
FIG. 20 is a schematic diagram of a current flow direction of another freewheeling loop according to one or more embodiments of the present application;
FIG. 21 is a schematic diagram of a current flow direction of still another freewheeling loop according to one or more embodiments of the present application;
FIG. 22 is a schematic structural diagram of a charge and discharge control apparatus according to one or more embodiments of the present application;
FIG. 23 is a schematic structural diagram of an electric device according to one or more embodiments of the present application;
FIG. 24 is a structural block diagram of an electronic device according to one or more embodiments of the present application; and
FIG. 25 is a schematic diagram of a computer-readable storage medium according to one or more embodiments of the present application.

### DETAILED DESCRIPTION

Embodiments of the technical solutions of the present application will be described in detail below with reference to the drawings. The following embodiments are only used to more clearly illustrate the technical solutions of the present application, and therefore, are only exemplary and do not limit the claimed scope of the present application.

Unless otherwise defined, all technical and scientific terms used herein have the same meaning as commonly understood by those skilled in the technical field to which the present application belongs. The terms used herein are only used to illustrate the specific embodiments, rather than limit the present application. The terms "include", "comprise", and "provided with", and any variations thereof in the description and claims of the present application and the above drawing description encompass non-exclusive inclusions.

In the description of the embodiments of the present application, technical terms such as "first", "second", and the like are only used to distinguish different objects and should not be interpreted as indicating or implying the relative importance or implicitly indicating the number, specific order, or primary and secondary relationship of the noted technical features. In the description of the embodiments of the present application, unless otherwise specifically defined, "plurality of" means two or more.

Reference in the present application to "embodiment" means that a particular feature, structure, or characteristic described in combination with the embodiment can be included in at least one embodiment of the present application. The references of the word in the context of the specification do not necessarily refer to the same embodiment, nor to separate or alternative embodiments exclusive of other embodiments. It will be explicitly and implicitly appreciated by those skilled in the art that the embodiments described herein can be combined with other embodiments.

In the description of the embodiments of the present application, the term "and/or" is merely a way to describe the associative relationship between associated objects, indicating that there are three possible relationships. For example, "A and/or B" may denote: the presence of A alone, the presence of both A and B, and the presence of B alone. In addition, the character "/" herein generally indicates an "or" relationship between the associated objects before and after the "/".

In the description of the embodiments of the present application, the term "plurality of" refers to two or more (including two). Similarly, "plurality of groups" refers to two or more (including two) groups, and "plurality of pieces" refers to two or more (including two) pieces.

A battery can provide power for new energy vehicles such as electric vehicles, ships, and spacecraft. A battery that supplies power may be referred to as a power battery. Due to the electrochemical characteristics of the power battery, the charging and discharging capacity of the power battery is greatly limited in low-temperature environments, which severely affects the user experience in winter. Therefore, to enable normal use of the power battery, heating is required for the power battery in low-temperature environments.

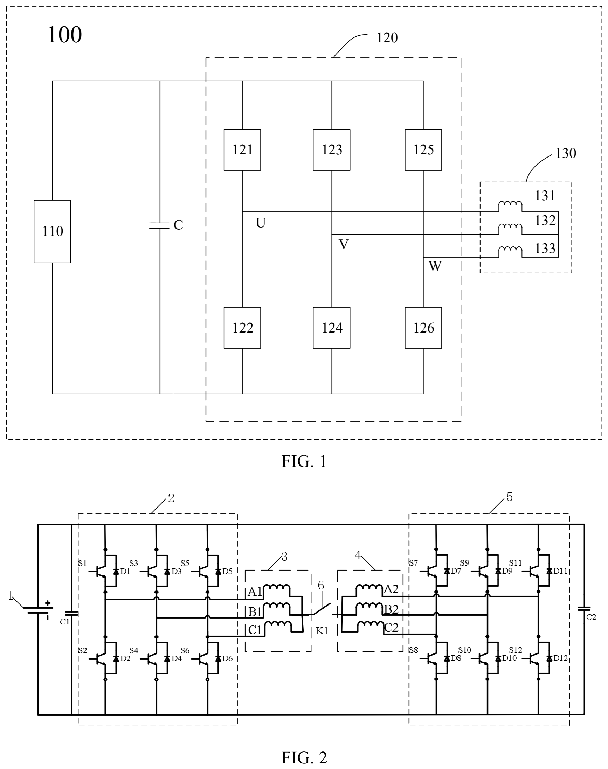

To reduce unnecessary costs incurred during the heating process of the battery, the related art allows utilizing a circuit loop including the motor and the battery to heat the battery. FIG. 1 is a diagram illustrating a charging and discharging circuit of a battery heating system according to the related art. As shown in FIG. 1, the battery heating system 100 may include a power supply module 110, an inverter module 120 connected to the power supply module 110, and a drive module 130 connected to the inverter module 120.

The power supply module 110 includes at least one battery. The inverter module 120 may be implemented by using various types of switches. For example, the inverter module 120 may be implemented by an inverter in a drive system of the motor, and the inverter may be implemented by using bridge arm switches of insulated gate bipolar transistors (IGBTs). Specifically, the number of bridge arms of the inverter is the same as the number of windings in the drive module 130. For example, the drive module 130 includes a three-phase winding motor, and the inverter includes three-phase bridge arms, i.e., including a U-phase bridge arm, a V-phase bridge arm, and a W-phase bridge arm. Each phase bridge arm in the three-phase bridge arms has an upper bridge arm and a lower bridge arm, and switches are respectively disposed on the upper bridge arm and the lower bridge arm. Specifically, the inverter module 120 includes an upper bridge arm switch 121 and a lower bridge arm switch 122 in the U-phase bridge arm, an upper bridge arm switch 123 and a lower bridge arm switch 124 in the V-phase bridge arm, and an upper bridge arm switch 125 and a lower bridge arm switch 126 in the W-phase bridge arm.

The drive module 130 may specifically include a winding 131 connected to the U-phase bridge arm, a winding 132 connected to the V-phase bridge arm, and a winding 133 connected to the W-phase bridge arm. One end of the winding 131 is connected to a connection point between an upper bridge arm and a lower bridge arm of the U-phase bridge arm, one end of the winding 132 is connected to a connection point between an upper bridge arm and a lower bridge arm of the V-phase bridge arm, and one end of the winding 133 is connected to a connection point between an upper bridge arm and a lower bridge arm of the W-phase bridge arm. The other end of the winding 131, the other end of the winding 132, and the other end of the winding 133 are connected in a co-linear manner.

It should be noted that the drive module 130 is not limited to a three-phase winding motor, but may also be a six-phase winding motor, a twelve-phase winding motor, or the like. Correspondingly, the inverter module 120 may include a three-phase bridge arm, a six-phase bridge arm, a twelve-phase bridge arm, or the like.

In some embodiments of the related art, the battery may be heated by modulating current through periodic switching control of the switches in the inverter module 120. For example, by controlling the upper bridge arm switch 121 and the lower bridge arm switch 124 in the inverter module 120 to be turned on, a discharging loop is formed between the positive terminal of the power supply module 110, the upper bridge arm switch 121, the winding 131, the winding 132, the lower bridge arm switch 124, and the negative terminal of the power supply module 110. In the discharging loop, the power supply module 110 discharges, and the winding 131 and the winding 132 store electrical energy. Subsequently, the upper bridge arm switch 121 and the lower bridge arm switch 124 are controlled to be turned off, and the lower bridge arm switch 122 and the upper bridge arm switch 123 are controlled to be turned on to form a charging loop among the negative terminal of the power supply module 110, the lower bridge arm switch 122, the winding 131, the winding 132, the upper bridge arm switch 123, and the positive terminal of the power supply module 110. In the charging loop, the winding 131 and the winding 132 release the stored electrical energy to charge the power supply module 110. By alternately forming the discharging loop and the charging loop in this way, an alternating current can be formed in the circuit shown in FIG. 1, and the alternating current flows through the battery in the power supply module 110. As a result, the internal resistance of the battery generates heat, thereby achieving the effect of battery heating.

In the charging and discharging circuit shown in FIG. 1, different discharging loops and charging loops can be implemented by controlling the switching of different switches, and the various control manners are not described herein by using examples.

When the charging and discharging circuit shown in FIG. 1 is adopted, and the drive module 130 only includes one motor, only all windings of this motor can be incorporated into the discharging loop and the charging loop at most. The number of the incorporated windings is small, and less electrical energy can be stored in the discharging loop. Consequently, the alternating current generated during the battery heating process is relatively small, which leads to a relatively low battery heating rate.

Moreover, for the plurality of windings incorporated into the discharging loop and the charging loop, currents flowing through different windings may flow in different directions, such that the stator in the drive module 130 generates a rotating magnetic field. However, the new energy vehicle needs to remain stationary during battery heating. Therefore, the rotor in the drive module 130 is required to be controlled to remain stationary, such that no torque is generated. Maintaining the rotor stationary while the stator generates a rotating magnetic field causes eddy current losses in the rotor, resulting in rotor heating.

Furthermore, the switches of the upper bridge arm and the lower bridge arm in the inverter module 120 each have a maximum current-carrying capacity, and excessive current flow through the switches may easily cause overcurrent damage to the switches in the inverter module 120. In the discharging loop and the charging loop formed in the circuit shown in FIG. 1, different switches may be connected in series. In a loop structure in which the switches are connected in series, the current flowing through the switches is relatively large, which easily causes overcurrent damage to the switch. To reduce the risk of overcurrent damage to the switches, only small currents can be controlled to be generated in the discharging loop and the charging loop, thereby restricting the battery heating, and resulting in low battery heating efficiency.

In some other embodiments of the related art, the drive module 130 in FIG. 1 may further include two motors. The two motors are connected in parallel between the positive terminal and the negative terminal of the power supply module 110. In the driving mode, both motors operate to convert electrical energy into mechanical energy, thereby providing dual-motor drive for the new energy vehicle. In the battery heating mode, according to the method in the embodiments where the above drive module 130 includes one motor, one or two of the two motors and the battery form a discharging loop and a charging loop, and the specific control process is not described herein again. Since the control manner of each of the two motors is the same as that in the single-motor scenario described above, issues such as low battery heating efficiency, rotor heating, and battery heating efficiency being limited by the constraints of the switches in the inverter module 120 in the single-motor scenario remain.

Based on this, the embodiments of the present application provide a charge and discharge control method, to improve battery heating efficiency, provide some implementations that are beneficial for reducing rotor heating, and provide some implementations that can, under the premise of generating higher heating currents, reduce the magnitude of current flowing through the switches in the inverter module.

The circuit architecture on which the embodiments of the present application are based is a circuit architecture involving dual-motor drive, and the circuit architecture includes a battery, a first motor, a second motor, a first motor controller, and a second motor controller. Windings of each phase of the first motor are each connected to a connection point between an upper bridge arm and a lower bridge arm of each bridge arm in the first motor controller in a one-to-one correspondence manner, and windings of each phase of the second motor are each connected to a connection point between an upper bridge arm and a lower bridge arm of each bridge arm in the second motor controller in a one-to-one correspondence manner. The upper bridge arms of the bridge arms of the first motor controller are connected in a co-linear manner and connected to the positive terminal of the battery, and the lower bridge arms of the bridge arms are connected in a co-linear manner and connected to the negative terminal of the battery. The upper bridge arms of the bridge arms of the second motor controller are connected in a co-linear manner and connected to the positive terminal of the battery, and the lower bridge arms of the bridge arms are connected in a co-linear manner and connected to the negative terminal of the battery. That is, the first motor controller and the second motor controller are connected in parallel between the positive terminal and the negative terminal of the battery.

It should be noted that the circuit architecture on which the embodiments of the present application are based differs from the dual-motor circuit architecture in the related art in that in the above circuit architecture of the embodiments of the present application, a switch is connected between the neutral point of the first motor and the neutral point of the second motor. For ease of intuitively understanding the circuit architecture on which the embodiments of the present application are based, descriptions are provided below with reference to the drawings.

FIG. 2 is a schematic diagram of a dual-motor circuit structure. In this schematic diagram, both the first motor and the second motor are exemplified as three-phase motors, and correspondingly, both the first motor controller and the second motor controller also have three-phase bridge arms. As shown in FIG. 2, the dual-motor circuit includes a battery 1, a first motor controller 2, a first motor 3, a second motor 4, a second motor controller 5, and a connection circuit 6.

The connection circuit 6 is connected between a neutral point of the first motor 3 and a neutral point of the second motor 4. The connection circuit 6 at least includes a switch K1. In addition to the switch K1, the connection circuit 6 may further include other elements, including but not limited to an inductor, a resistor, and the like. In FIG. 2, the first motor controller 2 is further connected in parallel to a first capacitor C1, and the second motor controller 5 is further connected in parallel to a second capacitor C2. As shown in FIG. 2, the first motor 3 includes three-phase windings A1, B1, and C1, and the second motor 4 includes three-phase windings A2, B2, and C2.

In the embodiments of the present application, based on the above dual-motor circuit architecture, the discharging loop and the charging loop of the battery 1 are formed by controlling the connection circuit 6 between the neutral points of the two motors to be activated, and controlling the switching of the switches in the first motor controller 2 and the second motor controller 5. In this way, more windings can be incorporated into the discharging loop and the charging loop, thereby increasing the electrical energy stored in the windings incorporated into the discharging loop, and improving the heating efficiency of the battery 1.

By controlling the switching of the switches in the first motor controller 2 and the second motor controller 5, the switches incorporated into the discharging loop or the charging loop can be connected in parallel, and the parallel connection of the switches enables current sharing, such that the current flowing through individual switches is reduced, thereby lowering the risk of overcurrent damage to the switches, and allows a larger alternating current to be generated in the entire loop to improve the temperature rise efficiency of the battery.

By controlling the upper bridge arms of all bridge arms in the first motor controller 2 to be turned on, and controlling the lower bridge arms of all bridge arms in the second motor controller 5 to be turned on, alternatively, by controlling the lower bridge arms of all bridge arms in the first motor controller 2 to be turned on, and the upper bridge arms of all bridge arms in the second motor controller 5 to be turned on, the current flowing through all windings in the same motor can flow in the same direction, such that the stator in the motor does not generate a rotating magnetic field, and eddy current losses in the rotor can be reduced, thereby reducing the risk of rotor heating.

The battery 1 in the embodiments of the present application may include but is not limited to a lithium-ion battery, a lithium metal battery, a lead-acid battery, a nickel-cadmium battery, a nickel-metal hydride battery, a lithium sulfur battery, a lithium-air battery, a sodiumion battery, or the like. In terms of configuration, the battery 1 in the embodiments of the present application may include but is not limited to a battery cell, or may be a battery module or a battery pack. In terms of application scenarios, the battery 1 may be applied to a power apparatus such as a vehicle and a ship. For example, the battery may be used in an electric vehicle to supply power to the motor of the electric vehicle and serve as a power source of the electric vehicle. The battery 1 may further supply power to other electric devices in the electric vehicle, such as an in-vehicle air conditioner and an in-vehicle player.

The charging and discharging circuit according to the embodiments of the present application may be applied to any electric device powered by a battery. In addition, the electric device has two motors, and a switch is provided between the center points of the two motors. The electric device may include, but is not limited to, an electric toy, an electric tool, an electric bike, an electric vehicle, a ship, a spacecraft, and the like. When the electric device utilizes the charge and discharge control method disclosed in the embodiments of the present application, and in the case that battery heating is required, more motor windings can be incorporated into the charging and discharging loop, and the magnitude of the generated alternating current is less affected by the maximum current-carrying capacity of the switches in the motor controller, thereby effectively improving battery heating efficiency. Furthermore, the electric device can further reduce the risk of rotor heating in the two motors by flexibly controlling the structure of the formed charging and discharging loop.

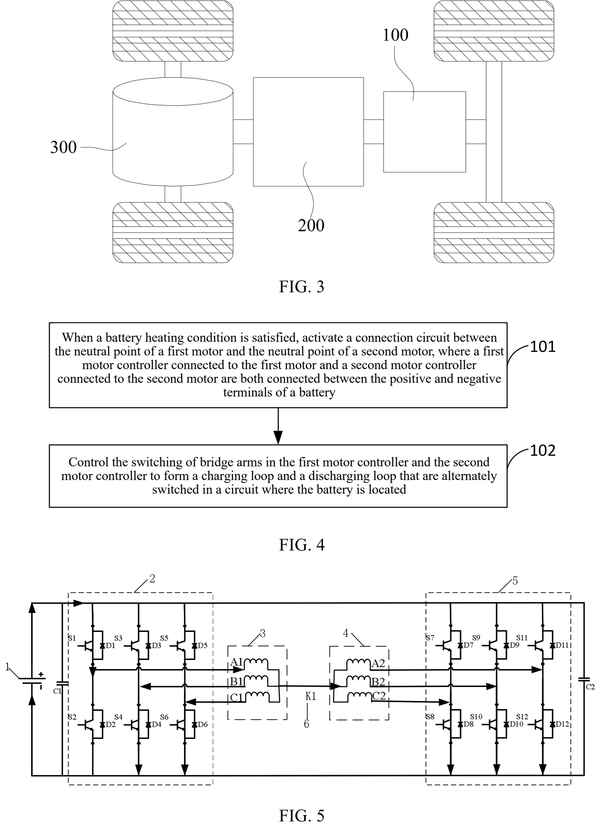

In the following embodiments, for ease of description, the present application is illustrated by taking a vehicle 1000 as an example of the electric device according to an embodiment of the present application. As shown in FIG. 3, FIG. 3 is a structural schematic view of a vehicle 1000 according to some embodiments of the present application. The vehicle 1000 may be a new energy vehicle, and the new energy vehicle may be a pure electric vehicle, an extended-range vehicle, or the like. A battery 1100 is provided inside the vehicle 1000, and the battery 1100 may be provided at the bottom, head, or tail of the vehicle 1000. The battery 1100 may be configured to power the vehicle 1000. For example, the battery 1100 may serve as an operation power source of the vehicle 1000. The vehicle 1000 may further include a controller 200 and a motor 300. The controller 200 is used for controlling the battery 1100 to power the motor 300, e.g., for operation power needed by the vehicle 1000 for start-up, navigation, and driving.

The battery 1100 may further be used as a driving power source of the vehicle 1000 to provide driving power for the vehicle 1000. The motor 300 converts the electrical energy output by the battery 1100 into mechanical energy, thereby driving the vehicle 1000 to move.

In practical applications, the number of the motors 300 may be one, two, etc. The charge and discharge control method according to the embodiments of the present application is applicable to a case where the vehicle 1000 has two motors 300.

Referring to FIG. 4, the embodiments of the present application provide a flowchart of a charge and discharge control method. The method specifically includes the following steps:
step 101: when a battery heating condition is satisfied, activating the connection circuit between the neutral point of the first motor and the neutral point of the second motor, where the first motor controller connected to the first motor and the second motor controller connected to the second motor are both connected between the positive terminal and the negative terminal of the battery; and
step 102: controlling the switching of bridge arms in the first motor controller and the second motor controller to form a charging loop and a discharging loop that are alternately switched in the circuit where the battery is located.

The battery in the embodiments of the present application may include but is not limited to a single battery, a battery module, a battery pack, or the like. The battery may include one battery, or may be a larger-scale battery formed by connecting a plurality of batteries in series.

The first motor and the second motor described above may include but are not limited to a three-phase motor, a four-phase motor, a six-phase motor, and the like. The number of phases of the first motor and the second motor may be the same or different. The number of bridge arms included in the first motor controller is the same as the number of phases of the first motor, and the number of bridge arms included in the second motor controller is the same as the number of phases of the second motor.

The switch connected between the neutral point of the first motor and the neutral point of the second motor may include but is not limited to a relay, an IGBT tube, or the like, and is capable of activating or disabling a circuit. Any device capable of being automatically turned on or off by a control signal may serve as the switch.

The execution body of the embodiments of the present application is a control module. The control module may include, but is not limited to, an electrically powered device, a full-vehicle controller, a domain controller, and the like, and the charge and discharge control method may be executed through cooperation of a battery management system, a full-vehicle controller, a motor controller, and the like. In the embodiments of the present application, the description is provided by taking a control module as an example of the execution body.

During use of the electrically powered device, the control module detects in real time whether the battery satisfies the battery heating condition. The battery heating condition may include, but is not limited to, the battery temperature being lower than a certain temperature threshold, the state of charge (SOC) of the battery being greater than a certain charge threshold, and the electrically powered device currently not being in a moving state, and the like. The temperature threshold may include but is not limited to -1 °C, 0 °C, 3 °C, etc. The charge threshold may include but is not limited to 10%, 30%, 40%, etc.

In response to detecting that the battery heating condition is currently satisfied, the control module transmits a control signal for controlling switch closure to the connection circuit connected between the neutral point of the first motor and the neutral point of the second motor. The connection circuit receives the above control signal and is activated. After the connection circuit is activated, the first motor and the second motor are switched from being connected in parallel to being connected in series, and the entire dual-motor circuit architecture is switched from the driving mode to the self-heating mode. The driving mode refers to a mode in which the first motor and the second motor are connected in parallel, and both the first motor and the second motor convert electrical energy into mechanical energy to drive the electrically powered device to move. The battery heating mode refers to a mode in which the electrically powered device remains stationary, the first motor and the second motor are connected in series, and a charging and discharging circuit is formed in the entire circuit to heat the battery.

When the connection circuit connected between the neutral point of the first motor and the neutral point of the second motor is activated, the control module controls the switching of the bridge arms in the first motor controller and the second motor controller, such that a charging loop and a discharging loop that are alternately switched in the circuit where the battery is located can be formed.

When battery heating is required, the connection circuit between the neutral point of the first motor and the neutral point of the second motor is activated, enabling flexible switching between driving mode and battery heating mode through a switch in the connection circuit. By controlling the switching of the bridge arms in the first motor controller and the second motor controller, windings in the first motor and the second motor can be connected in series and incorporated into the formed discharging loop or charging loop, such that the total inductance of the windings incorporated into the loop is increased, thereby increasing the electrical energy stored in the windings incorporated into the discharging loop. The stored electrical energy is then fed back into the battery via the charging loop. The alternate switching between the discharging loop and the charging loop allows the battery to generate more heat within a unit time, thereby effectively improving battery heating efficiency. Additionally, only a connection circuit between the neutral points of the two motors is added to the circuit structure, enabling a substantial increase in the temperature rise efficiency during battery heating at a low cost.

In some embodiments of the present application, forming the charging loop and the discharging loop that are alternately switched in the circuit where the battery is located includes: in the circuit where the battery is located, alternately forming a discharging loop where the battery discharges electrical energy into the windings in the first motor and the second motor, and a charging loop where electrical energy from the windings in the first motor and the second motor is fed back into the battery.

At least one winding in the first motor and at least one winding in the second motor are incorporated into the discharging loop or the charging loop, such that the total inductance for storing electrical energy released by the battery in the formed discharging loop or charging loop is increased, thereby improving battery heating efficiency.

In some embodiments of the present application, the specific execution process of step 102 may include alternately executing a first discharging mode and a first charging mode to alternately switch between a first discharging loop and a first charging loop in the circuit where the battery is located.

The first discharging mode and the first charging mode are used for controlling the switching of the bridge arms in the first motor controller and the second motor controller. In the first discharging loop and the first charging loop, the directions of currents flowing through the battery are opposite, and the directions of currents flowing through the neutral line between the first motor and the second motor are the same.

The first discharging mode is executed to form the above first discharging loop, and the first charging mode is executed to form the above first charging loop. The first discharging loop and the first charging loop can be alternately switched by alternately executing the first discharging mode and the first charging mode.

In some embodiments, both the first discharging mode and the first charging mode may include at least one control signal, and the at least one control signal is used for controlling the upper bridge arm or the lower bridge arm of at least one bridge arm in each of the first motor controller and the second motor controller to be turned on. The bridge arm switches that are not specified to be turned on in the first discharging mode and the first charging mode are all controlled to be turned off.

In other embodiments, the first discharging mode may include a control signal corresponding to each bridge arm switch in the first motor controller and the second motor controller. The control signal may be used for controlling the bridge arm switch to be turned on, or may be used for controlling the bridge arm switch to be turned off. The control signal corresponding to at least one bridge arm switch in the first motor controller is used for controlling the bridge arm to be turned on, and the control signal corresponding to at least one bridge arm switch in the second motor controller is used for controlling the bridge arm to be turned on.

The first discharging mode and the first charging mode may be preset in the control module, or a plurality of combinations of control signals may be preset in the control module. Each combination can serve as a pair of the first discharging mode and the first charging mode. When battery heating is required, the control module randomly selects one combination from the plurality of preset combinations. Alternatively, heating requirements corresponding to different combinations may further be preset. When heating is required, the control module selects one corresponding combination from the plurality of combinations as the first discharging mode and the first charging mode based on the heating requirements. The heating requirements may include but are not limited to battery temperature, magnitude of current required for heating, heating frequency, or the like.

Based on the combinations of different bridge arms in the first motor controller and the second motor controller, multiple combination schemes of the first discharging mode and the first charging mode may exist. Taking the circuit structure diagram shown in FIG. 2 as an example, in an embodiment, the first discharging mode may include control signals that control the switches S1, S4, and S6 in the first motor controller 2 and the switches S8, S10, and S12 in the second motor controller 5 to be closed, and the first charging mode may include control signals that control the switches S2, S3, and S5 in the first motor controller 2 and the switches S7, S9, and S11 in the second motor controller 5 to be closed. In another embodiment, the first discharging mode may include control signals that control all upper bridge arm switches of the first motor controller 2 and all lower bridge arm switches in the second motor controller 5 to be closed, and the first charging mode may include control signals that control all lower bridge arm switches in the first motor controller 2 and all upper bridge arm switches in the second motor controller 5 to be closed. In the embodiments of the present application, the first discharging mode and the first charging mode include but are not limited to the cases in the above two embodiments, and examples are not described exhaustively herein.

The first discharging mode and the first charging mode are alternately executed to form the first discharging loop and the first charging loop which are alternately switched, thereby generating an oscillating current flowing through the battery. As a result, the internal resistance of the battery generates heat, thereby achieving the effect of battery heating. The first discharging mode and the first charging mode enable convenient and flexible control of the switching of bridge arm switches in the first motor controller and the second motor controller, thereby improving control efficiency.

Forming the first discharging loop and the first charging loop once may be referred to as a charge-discharge cycle, and the circuit structures of the first discharging loops formed in different charge-discharge cycles may be the same or different. The circuit structures of the first charging loops formed in different charge-discharge cycles may be the same or different. For example, as shown in FIG. 2, the first discharging loops in different charge-discharge cycles may all control the switch S1 in the first motor controller 2 and the switch S8 in the second motor controller 5 to be closed. As another example, in one charge-discharge cycle, the first discharging loop may control the switch S1 in the first motor controller 2 and the switch S8 in the second motor controller 5 to be closed; in the next cycle, the first discharging loop may control the switch S3 in the first motor controller 2 and the switch S10 in the second motor controller 5 to be closed; in still another cycle, the first discharging loop may control the switch S5 in the first motor controller 2 and the switch S12 in the second motor controller 5 to be closed.

In different charge-discharge cycles, the circuit structures of the first discharging loops are different, and the circuit structures of the first charging loops are different. In such embodiments, by reasonably controlling the switching of each switch in the first motor controller and the second motor controller, the switching frequency of all switches during the entire charge and discharge process can be made similar, thereby reducing the case where individual switches have shorter service life compared to other switches due to a relatively large number of switching operations.

In the embodiments in which the first discharging mode and the first charging mode are alternately executed, during execution of the first discharging mode, the battery discharges electrical energy into the windings incorporated into the first discharging loop. Since the inductance of the incorporated windings is known, the duration required for fully charging the incorporated windings can be determined. After the first discharging loop lasts for the duration, the first charging mode is activated and then executed to form the first charging loop. In the first charging loop, the windings feed the stored electrical energy back into the battery. However, the duration required for the full release of the electrical energy in the windings is difficult to determine. Therefore, within a single control cycle for executing the first discharging mode and the first charging mode, the time allocated to executing the first charging mode is set relatively longer to allow the windings to fully release the stored electrical energy, thereby reducing the occurrence of current backflow into the windings due to switching to execute the first discharging mode before the electrical energy in the windings is not fully released.

Execution of the first charging mode occupies a relatively longer period of time, which may result in a situation where the electrical energy stored in the motor windings is fully discharged without switching to the first discharging loop, thereby leading to an extended battery heating time. Based on this, in some other embodiments of the present application, a second discharging mode and a second charging mode are provided. The above first discharging mode, the above first charging mode, the second discharging mode, and the second charging mode are cyclically executed, and the first discharging loop, the first charging loop, a second discharging loop, and a second charging loop are cyclically switched in the circuit where the battery is located. The second discharging mode and the second charging mode are also used for controlling the switching of the bridge arms in the first motor controller and the second motor controller. The turned-on bridge arm switches in the second discharging loop are the turned-off bridge arm switches in the first discharging loop. The directions of currents flowing through the neutral line between the first motor and the second motor in the second discharging loop and the first charging loop are opposite. The directions of currents flowing through the neutral line in the second charging loop and the first discharging loop are also opposite.

The second discharging mode is executed to form the above second discharging loop, and the second charging mode is executed to form the above second charging loop. The first discharging mode, the first charging mode, the second discharging mode, and the second charging mode are cyclically executed, such that the first discharging loop, the first charging loop, the second discharging loop, and the second charging loop can be cyclically switched in sequence in the circuit.

The second discharging mode and the second charging mode described above also include control signals for controlling the first motor controller and the second motor controller. However, the specific control signals included are different from those in the first discharging mode and the first charging mode. Other aspects are similar to the above description of the first discharging mode and the first charging mode. The details are not described herein again.

It should be noted that the components included in the second discharging loop and the first charging loop may be identical, while the directions of currents flowing through the neutral line are opposite. The components included in the second charging loop and the first discharging loop may also be identical, and the directions of currents flowing through the neutral line are opposite. Taking the second discharging loop and the first charging loop as an example to illustrate the principle of opposite current directions, the opposite current directions are caused by different potential differences between the battery and the windings in the second discharging loop and the first charging loop. In the first charging loop, electrical energy is stored in the winding, and the potential of the winding is higher than that of the battery, thereby generating a current that flows from the winding to the positive terminal of the battery. After the electrical energy stored in the winding in the first discharging loop is fully released, the potential of the winding is lower than that of the battery. Therefore, a current flowing from the positive terminal of the battery to the winding is generated in the second discharging loop.

Since the second discharging loop and the first charging loop include identical components, the switches included in the first charging loop are closed when the first charging mode is executed to form the first charging loop, such that switching to execute the second discharging mode does not require controlling the switching of the switches, and the circuit automatically switches from the first charging loop to the second discharging loop due to fully release of the electrical energy in the windings. If, during execution of the first charging mode, only the turned-on bridge arm switches in the first discharging loop are turned off, other switches are not controlled to be turned on, and, alternatively, the first charging loop in which the fully charged windings feed electrical energy back into the battery is formed by using the characteristic that the bridge arm switches include freewheeling diodes. In this case, executing the second discharging mode requires controlling some switches to be turned on, such that the formed second discharging loop and the first charging loop include identical components, while the directions of currents flowing through the neutral line are opposite.

Taking the circuit structure diagram shown in FIG. 2 as an example, when the first discharging mode includes control signals that control the switches S1, S4, and S6 in the first motor controller 2 and the switches S8, S10, and S12 in the second motor controller 5 to be closed. The first charging mode includes control signals that control the switches S1, S4, S6, S8, S10, and S12 to be turned off, and control signals that control the switches S2, S3, S5, S7, S9, and S11 to be closed. Therefore, the second discharging mode may not include a control signal. The second charging mode may include control signals that control the switches S2, S3, S5, S7, S9, and S11 to be turned off, and control signals that control the switches S1, S4, S6, S8, S10, and S12 to be closed.

If the first charging mode only includes the control signals that control the switches S1, S4, S6, S8, S10, and S12 to be turned off, the second discharging mode may include the control signals that control the switches S2, S3, S5, S7, S9, and S11 to be closed.

The above turned-on bridge arm switches in the first discharging loop are all turned off in the second discharging loop, and the turned-on bridge arm switches in the second discharging loop are the turned-off bridge arm switches in the first discharging loop. In this way, in one control cycle of cyclically switching among the first discharging loop, the first charging loop, the second discharging loop, and the second charging loop, the number of switching operations on individual switches in the first motor controller and the second motor controller can be balanced, which is beneficial for maintaining a uniform service life of the switches in the respective motor controllers and reducing the risk of damage to individual switches due to a relatively large number of switching operations.

Since the first discharging mode, the first charging mode, the second discharging mode, and the second charging mode are cyclically executed, and the directions of currents flowing through the neutral line in the first charging loop and the second discharging loop are opposite, in the second discharging loop, a current path returning from the neutral line to the positive terminal of the battery along the current direction at the neutral line in the first charging loop exists. Therefore, if the current stored in the windings is not fully released when switching to the second discharging loop, the circuit structure of the second discharging loop allows the current to continue flowing in the same direction, enabling the windings to continue discharging until the discharge of the windings is completed, after which the current direction is reversed due to the change in potential to initiate the process of the second discharging loop. In this way, the windings are not charged when the electrical energy of the windings is not fully released, thereby reducing the occurrence of current backflow into the windings. Similarly, no current backflow into the windings occurs when switching from the second charging loop to the first discharging loop. Furthermore, during the process of cyclical loop switching, there is no stage where the battery is neither charged nor discharged, thereby improving battery heating efficiency and increasing the temperature rise rate of the battery.

In some embodiments of the present application, executing the above first discharging mode to form the first discharging loop in the circuit where the battery is located may include:
controlling the upper bridge arm of at least one first bridge arm in the first motor controller to be turned on, and controlling the lower bridge arm of at least one second bridge arm in the second motor controller to be turned on. The formed first discharging loop includes the battery, the turned-on upper bridge arm in the first motor controller and the winding in the first motor connected to the turned-on upper bridge arm, and the turned-on lower bridge arm in the second motor controller and the winding in the second motor connected to the turned-on lower bridge arm.

For ease of description, the bridge arm in the first motor controller is referred to as the first bridge arm, and the bridge arm in the second motor controller is referred to as the second bridge arm. Controlling the upper bridge arm of at least one first bridge arm to be turned on includes, but is not limited to, controlling one, two, or all upper bridge arms in the first motor controller to be turned on. Controlling the lower bridge arm of at least one second bridge arm to be turned on includes, but is not limited to, controlling one, two, or all lower bridge arms in the second motor controller to be turned on.

The flow direction of the current in the formed first discharging loop is: positive terminal of the battery→turned-on upper bridge arm in the first motor controller→winding in the first motor connected to the turned-on upper bridge arm→winding in the second motor connected to the turned-on lower bridge arm in the second motor controller→turned-on lower bridge arm in the second motor controller→negative terminal of the battery.

In some embodiments of the present application, executing the first discharging mode may also be controlling the upper bridge arm of at least one second bridge arm in the second motor controller to be turned on and controlling at least one first bridge arm in the first motor controller to be turned on.

As shown in FIG. 2, during execution of the first discharging mode, the switches S1 and S3 in the first motor controller 2 may be controlled to be turned on, and the switch S8 in the second motor controller 5 may be controlled to be turned on. In this case, the flow direction of the current in the formed first discharging loop is: positive terminal of battery 1→S1 and S3→windings A1 and B1→winding C2→S8→negative terminal of battery 1.

In the first discharging loop formed in the embodiments, the winding in the first motor connected to the turned-on upper bridge arm, the winding in the second motor connected to the turned-on lower bridge arm in the second motor controller, the winding incorporated into the loop in the first motor, and the winding incorporated into the loop in the second motor are connected in series, and the series connection of the windings can increase the total inductance in the formed first discharging loop, thereby enabling storage of a greater amount of electrical energy to improve battery heating efficiency. In embodiments where a plurality of upper bridge arms in the first motor controller are turned on and/or a plurality of lower bridge arms in the second motor controller are turned on, the plurality of turned-on upper bridge arms in the first motor controller are connected in parallel, and the plurality of turned-on lower bridge arms in the second motor controller are connected in parallel. The parallel connection functions to enable current sharing, such that the current flowing through individual upper bridge arms or lower bridge arms is relatively small, which reduces the risk of overcurrent damage to the bridge arm switches, and allows a larger alternating current to be generated in the entire loop to improve the temperature rise efficiency of the battery. Additionally, in embodiments where all upper bridge arms in the first motor controller are turned on, the current in all windings of the first motor flows in the same direction. Alternatively, in embodiments where all lower bridge arms in the second motor controller are turned on, the current in all windings of the second motor flows in the same direction. In these two types of embodiments, the stators of the motors do not generate a rotating magnetic field, which can significantly reduce eddy current losses in the rotors and thus reduce the risk of rotor heating.

In some embodiments of the present application, after the execution of the above first discharging mode, executing the first charging mode to form the first charging loop in the circuit where the battery is located includes:
controlling both the turned-on upper bridge arm and the turned-on lower bridge arm during execution of the first discharging mode to be turned off, controlling the lower bridge arm of at least one first bridge arm in the first motor controller to be turned on, and controlling the upper bridge arm of at least one second bridge arm in the second motor controller to be turned on. The formed first charging loop includes the battery, the turned-on lower bridge arm in the first motor controller and the winding in the first motor connected to the turned-on lower bridge arm, and the turned-on upper bridge arm in the second motor controller and the winding in the second motor connected to the turned-on upper bridge arm.

The above at least one first bridge arm is a first bridge arm of which the upper bridge arm is turned on in the first discharging loop, and the at least one second bridge arm is a second bridge arm of which the lower bridge arm is turned on in the first discharging loop. Controlling the lower bridge arm of at least one first bridge arm to be turned on includes, but is not limited to, controlling one, two, or all lower bridge arms of the first motor controller to be turned on. Controlling the upper bridge arm of at least one second bridge arm to be turned on includes, but is not limited to, controlling one, two, or all upper bridge arms of the second motor controller to be turned on.

The flow direction of the current in the formed first charging loop is: negative terminal of the battery→turned-on lower bridge arm in the first motor controller→winding in the first motor connected to the turned-on lower bridge arm→winding in the second motor connected to the turned-on upper bridge arm in the second motor controller→turned-on upper bridge arm in the second motor controller→positive terminal of the battery.

As shown in FIG. 2, when the switches S1, S3, and S8 are controlled to be turned on in the first discharging mode, the first charging mode is executed, during which the switches S1, S3, and S8 are turned off, the switches S2 and S4 in the first motor controller 2 are turned on, and the switch S7 in the second motor controller 5 is turned on. The flow direction of the current in the formed first charging loop is: negative terminal of battery 1→S2 and S4→windings A1 and B1→winding C2→S7→positive terminal of battery 1.

In the first charging loop formed in the embodiments, the winding in the first motor connected to the turned-on lower bridge arm in the first controller and the winding in the second motor connected to the turned-on upper bridge arm in the second motor controller are connected in series, and the electrical energy in energy-storing windings in the first discharging loop is fed back into the battery. The first charging loop cooperates with the first discharging loop, such that the direction of the current flowing through the battery is changed from flowing from the positive terminal to the negative terminal to flowing from the negative terminal to the positive terminal, thereby forming an alternating current flowing through the battery. As a result, the internal resistance of the battery generates heat, thereby achieving the effect of battery heating.

In some other embodiments of the present application, during execution of the first charging mode, both the turned-on upper bridge arm and the turned-on lower bridge arm during execution of the first discharging mode may also be controlled to be turned off, and no additional switches are controlled to be turned on. The current loop is formed by using freewheeling diodes included in the switches in the motor controllers. The formed first charging loop includes the battery, the freewheeling diode in the lower bridge arm of at least one first bridge arm, the winding in the first motor connected to at least one first bridge arm, the winding in the second motor connected to at least one second bridge arm, and the freewheeling diode in the upper bridge arm of the at least one second bridge arm.

The above at least one first bridge arm is a first bridge arm of which the upper bridge arm is turned on in the first discharging loop, and the at least one second bridge arm is a second bridge arm of which the lower bridge arm is turned on in the first discharging loop.

The flow direction of the current in the formed first charging loop is: negative terminal of the battery→freewheeling diode in the lower bridge arm connected to the turned-on upper bridge arm in the first motor controller in the first discharging loop→winding in the first motor connected to the freewheeling diode→winding in the second motor connected to the turned-on lower bridge arm in the second motor controller in the first discharging loop→freewheeling diode in the upper bridge arm connected to the turned-on lower bridge arm in the second motor controller in the discharging loop→positive terminal of the battery.

As shown in FIG. 2, when the switches S1, S3, and S8 are controlled to be turned on in the first discharging mode, the first charging mode is executed, during which the switches S1, S3, and S8 are turned off. The flow direction of the current in the formed first charging loop is: negative terminal of battery 1→D2 and D4→windings A1 and B1→winding C2→D7→positive terminal of battery 1.

In forming the first charging loop in the embodiments, the switches in the motor controllers are not required to be turned on, and the freewheeling diodes in the switches are used to form the first charging loop, resulting in a simpler control manner. In the formed first charging loop, the electrical energy in energy-storing windings in the first discharging loop is fed back into the battery, such that the direction of the current flowing through the battery is changed from flowing from the positive terminal to the negative terminal to flowing from the negative terminal to the positive terminal, thereby forming an alternating current flowing through the battery. As a result, the internal resistance of the battery generates heat, thereby achieving the effect of battery heating.

In some embodiments of the present application, the first discharging loop in any one of the above embodiments and the first charging loop in any one of the above embodiments may be formed cyclically. The first discharging loop and the first charging loop are alternately formed, such that an alternating current is generated in the circuit where the battery is located. As a result, the internal resistance of the battery generates heat, thereby achieving the effect of current heating. Since the winding in the first motor and the winding in the second motor in the formed loop are connected in series, the total inductance in the first discharging loop and the first charging loop is increased, thereby improving the temperature rise rate of the battery.

In the first discharging loop and the first charging loop formed in the above embodiments, the current first flows through the first motor controller after flowing out of the battery. In some other embodiments, the control manner of the first motor controller may also be interchanged with the control manner of the second motor controller to cause the current to first flow through the second motor controller after flowing out of the battery.

Specifically, during the process of forming the first discharging loop, the upper bridge arm of at least one second bridge arm in the second motor controller may be controlled to be turned on, and the lower bridge arm of at least one first bridge arm in the first motor controller is controlled to be turned on. The first discharging loop formed in this way includes the battery, the turned-on upper bridge arm in the second motor controller and the winding in the second motor connected to the turned-on upper bridge arm, and the turned-on lower bridge arm in the first motor controller and the winding in the first motor connected to the turned-on lower bridge arm.

As shown in FIG. 2, during execution of the first discharging mode, the switches S7 and S9 in the second motor controller 5 may be controlled to be turned on, and the switch S6 in the first motor controller 2 may be controlled to be turned on. In this case, the flow direction of the current in the formed first discharging loop is: positive terminal of battery 1→S7 and S9→windings B2 and C2→winding C1→S6→negative terminal of battery 1.

Accordingly, in some other embodiments, during the process of forming the first charging loop, the turned-on bridge arm switches in the first discharging loop may all be controlled to be turned off, the lower bridge arm connected to the turned-on upper bridge arm in the second motor controller in the first discharging loop may be controlled to be turned on, and the upper bridge arm connected to the turned-on lower bridge arm in the first motor controller in the first discharging loop may be controlled to be turned on. The formed first charging loop includes the battery, the turned-on lower bridge arm in the second motor controller and the winding in the second motor connected to the turned-on lower bridge arm, and the turned-on upper bridge arm in the first motor controller and the winding in the first motor connected to the turned-on upper bridge arm.

As shown in FIG. 2, during execution of the first charging mode, the turned-on S7, S9, and S6 in the first discharging loop may be controlled to be turned off, and S5, S8, and S10 are controlled to be turned on. The flow direction of the current in the formed first charging loop is: negative terminal of battery 1→S8 and S10→windings B2 and C2→winding C1→S5→positive terminal of battery 1.

When all turned-on switches in the first discharging loop are turned off in the above process of forming the first charging circuit, other switches may not be turned on. The first charging loop formed in this way includes the battery, the freewheeling diodes in the lower bridge arms connected to the turned-on upper bridge arms in the second motor controller in the first discharging loop and the windings in the second motor connected to the freewheeling diodes, and the freewheeling diode in the upper bridge arm connected to the turned-on lower bridge arm in the first motor controller in the first discharging loop and the winding in the first motor connected to the freewheeling diode.

As shown in FIG. 2, during execution of the first charging mode, the turned-on S7, S9, and S6 in the first discharging loop may be controlled to be turned off, The flow direction of the current in the formed first charging loop is: negative terminal of battery 1→D8 and D10→windings B2 and C2→winding C1→D5→positive terminal of battery 1.

For the charge and discharge switching solution where the current first flows through the second motor controller after flowing out of the battery, the first discharging loop and the first charging loop may be cyclically switched according to the above control manners, such that an alternating current is generated in the circuit. As a result, the internal resistance of the battery generates heat, thereby achieving the effect of current heating.

In some other embodiments of the present application, a first discharging loop, a first charging loop, a second discharging loop, and a second charging loop may also be formed in one heating cycle. The currents in the first discharging loop and the first charging loop may first flow through the first motor controller after flowing out of the battery, and the currents in the second discharging loop and the second charging loop may first flow through the second motor controller after flowing out of the battery. In addition, the turned-on bridge arm switches in the second discharging loop are the turned-off bridge arm switches in the first discharging loop; the directions of the currents flowing through the neutral line between the two motors in the second discharging loop and the first charging loop are opposite; and the directions of the currents flowing through the neutral line in the second charging loop and the first discharging loop are opposite.

As shown in FIG. 2, during execution of the first discharging mode, the switches S1 and S3 in the first motor controller 2 may be controlled to be turned on, and the switch S8 in the second motor controller 5 may be controlled to be turned on. In this case, the flow direction of the current in the formed first discharging loop is: positive terminal of battery 1→S1 and S3→windings A1 and B1→winding C2→S8→negative terminal of battery 1. After the execution of the first discharging mode, the first charging mode is executed, during which the switches S1, S3, and S8 may be turned off, the switches S2 and S4 in the first motor controller 2 may be turned on, and the switch S7 in the second motor controller 5 may be turned on. The flow direction of the current in the formed first charging loop is: negative terminal of battery 1→S2 and S4→windings A1 and B1→winding C2→S7→positive terminal of battery 1. After the execution of the first charging mode, the second discharging mode is executed, during which the switches S9 and S11 in the second motor controller 5 may be controlled to be turned on, and the switch S6 in the first motor controller 2 may be controlled to be turned on. In this case, the flow direction of the current in the formed second discharging loop is: positive terminal of battery 1→S9 and S11→windings B2 and C2→winding C1→S6→negative terminal of battery 1. After the execution of the second discharging mode, the second charging mode is executed, during which S6, S9, and S11 are turned off, and S5, S10, and S12 are turned on. In this case, the flow direction of the current in the formed second charging loop is: negative terminal of battery 1→S10 and S12→winding B2 and C2→winding Cl→S5→positive terminal of battery 1.

From the above examples, it can be intuitively seen that, in one heating cycle composed of the first discharging loop, the first charging loop, the second discharging loop, and the second charging loop, all the switches S1-S12 in the first motor controller 2 and the second motor controller 5 are turned on once, such that the switching frequency of each switch is more balanced, thereby prolonging the service life of the first motor controller 2 and the second motor controller 5. In addition, the directions of the currents flowing through the neutral line in the first charging loop and the second discharging loop are opposite. As shown in FIG. 2, in the second discharging loop, a current path is generated for the release of electrical energy from the windings, that is, negative terminal of battery 1→D2 and D4→windings A1 and B1→windings A2, B2, and C2→D7, S9, and S11→positive terminal of battery 1. Therefore, if the current stored in the windings A1, B1, and C2 is not fully released when switching to the second discharging loop, the circuit structure of the second discharging loop allows the current to continue flowing in the same direction, enabling the windings A1, B1, and C2 to continue discharging until the discharge of the windings A1, B1, and C2 is completed, after which the current direction is reversed due to the change in potential to initiate the process of the second discharging loop. In this way, the windings are not charged when the electrical energy of the windings is not fully released, thereby reducing the occurrence of current backflow into the windings.

In some other embodiments of the present application, executing the first discharging mode to form the first discharging loop in the circuit where the battery is located includes: controlling the upper bridge arm of at least one first bridge arm in the first motor controller to be turned on; controlling the lower bridge arm of at least one first bridge arm, excluding the first bridge arms whose upper bridge arms are turned on, in the first motor controller; and controlling the lower bridge arm of at least one second bridge arm in the second motor controller to be turned on. The formed first discharging loop includes a loop among the battery, the turned-on upper bridge arm in the first motor controller and the winding in the first motor connected to the turned-on upper bridge arm, and the turned-on lower bridge arm in the second motor controller and the winding in the second motor connected to the turned-on lower bridge arm, and a loop among the battery, the turned-on upper bridge arm in the first motor controller and the winding connected to the turned-on upper bridge arm, and the turned-on lower bridge arm in the first motor controller and the winding in the first motor connected to the turned-on lower bridge arm.

For "controlling the upper bridge arm of at least one first bridge arm in the first motor controller to be turned on", the "at least one first bridge arm" here may include, but is not limited to, one, two, or no less than two first bridge arms, and the number of the at least one first bridge arm is less than the total number of bridge arms included in the first motor controller. That is, when the upper bridge arm of at least one first bridge arm in the first motor controller is controlled to be turned on, a first bridge arm of which the upper bridge arm is turned off still exists in the first motor controller. For the first bridge arms of which the upper bridge arms are turned off, the lower bridge arm of at least one of the first bridge arms is turned on. That is, both the turned-on upper bridge arm and the turned-on lower bridge arm exist in the first motor controller, and the turned-on upper bridge arm and the turned-on lower bridge arm are from different bridge arms.

For "controlling the lower bridge arm of at least one second bridge arm in the second motor controller to be turned on", "the lower bridge arm of at least one second bridge arm" here may include, but is not limited to, the lower bridge arms of one, two, or no less than two second bridge arms. The number of the at least one second bridge arm may be less than or equal to the total number of bridge arms included in the second motor controller.

Under the control manner of the embodiments, the formed first discharging loop includes two loops. The flow direction of the current in one of the loops is: positive terminal of the battery→turned-on upper bridge arm in the first motor controller→winding in the first motor connected to the turned-on upper bridge arm→winding in the second motor connected to the turned-on lower bridge arm in the second motor controller→turned-on lower bridge arm in the second motor controller→negative terminal of the battery. The flow direction of the current in the other formed loop is: positive terminal of the battery→turned-on upper bridge arm in the first motor controller→winding in the first motor connected to the turned-on upper bridge arm→winding in the first motor connected to the turned-on lower bridge arm in the first motor controller→turned-on lower bridge arm in the first motor controller→negative terminal of the battery.

To facilitate understanding of the flow directions of the current in the above first discharging loop, the flow direction is described below with reference to the drawings. In the schematic diagram of the charging and discharging circuit shown in FIG. 5, S1, S4, S6, S8, S10, and S12 are turned on. In this case, the formed first discharging loop includes a loop among battery 1, switch S1, windings A1, B1, and C1, and switches S4 and S6, and a loop among battery 1, switch S1, winding A1, windings A2, B2, and C2, and switches S8, S10, and S12. The flow directions of the current in the above formed first discharging loop are shown by arrows in FIG. 5, that is, positive terminal of battery 1→S1→winding A1→windings A2, B2, and C2→S8, S10, and S12→negative terminal of battery 1, and positive terminal of battery 1→Sl→winding A1→windings B1 and C1→S4 and S6→negative terminal of battery 1.

The first discharging loop formed in the embodiments includes two loops, at least two windings in the first motor and at least one winding in the second motor are incorporated into the first discharging loop, and the windings of the first motor and the winding of the second motor among the incorporated windings are connected in series, which increases the total inductance in the first discharging loop and the total amount of electrical energy stored in the windings in the first discharging loop, thereby improving the heating rate of the battery. When a plurality of upper bridge arms and/or a plurality of lower bridge arms are turned on in the first motor controller, and/or a plurality of lower bridge arms are turned on in the second motor controller, a plurality of bridge arm switches may be connected in parallel in the first discharging loop. The parallel connection of the switches allows current sharing, such that the current flowing through individual switches is reduced, thereby lowering the risk of overcurrent damage to the switches and reducing the restriction of the current-carrying capability of the switches on the heating current. As a result, a larger heating current is allowed to be generated in the first discharging loop without causing overcurrent in individual switches.

In some embodiments, after the execution of the above mode in the first aspect, executing the first charging mode to form the first charging loop in the circuit where the battery is located includes:
for the bridge arm where the turned-on upper bridge arm in the first motor controller during execution of the first discharging mode is located, controlling the upper bridge arm to be turned off and the lower bridge arm to be turned on; for the bridge arm where the turned-on lower bridge arm in the first motor controller during execution of the first discharging mode is located, controlling the lower bridge arm to be turned off and the upper bridge arm to be turned on; and for the bridge arm where the turned-on lower bridge arm during execution of the first discharging mode controlled by the second motor is located, controlling the lower bridge arm to be turned off and the upper bridge arm to be turned on. The formed first charging loop includes a loop among the battery, the turned-on lower bridge arm in the first motor controller and the winding in the first motor connected to the turned-on lower bridge arm, and the turned-on upper bridge arm in the second motor controller and the winding in the second motor connected to the turned-on upper bridge arm, and a loop among the battery, the turned-on lower bridge arm in the first motor controller and the winding in the first motor connected to the turned-on lower bridge arm, and the turned-on upper bridge arm in the first motor controller and the winding in the first motor connected to the turned-on upper bridge arm.

In the above first charging mode, all turned-on bridge arm switches during execution of the first discharging mode are turned off, and the turned-off switches in the first discharging mode of the bridge arms where the turned-on switches in the first discharging mode are located are turned on. The first charging loop formed in this way includes two charging loops. The flow direction of the current in one of the charging loops is: negative terminal of the battery→turned-on lower bridge arm in the first motor controller→winding in the first motor connected to the turned-on lower bridge arm→winding in the second motor connected to the turned-on upper bridge arm in the second motor controller→turned-on upper bridge arm in the second motor controller→positive terminal of the battery. The flow direction of the current in the other charging loop is: negative terminal of the battery→turned-on lower bridge arm in the first motor controller→winding in the first motor connected to the turned-on lower bridge arm→winding in the first motor connected to the turned-on upper bridge arm→turned-on upper bridge arm in the first motor controller→positive terminal of the battery.

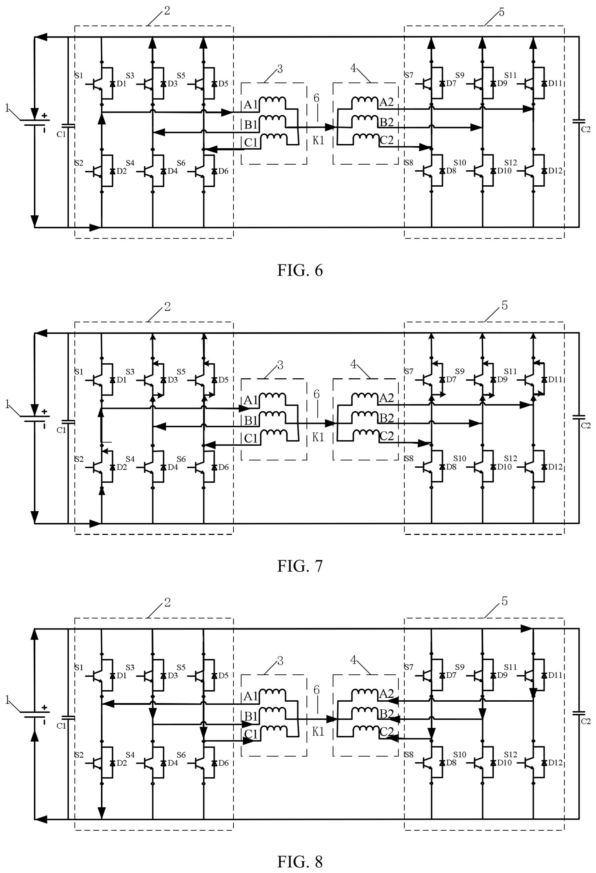

To facilitate understanding of the flow directions of the current in the first charging loop, the flow direction is described below with reference to the drawings. In the schematic diagram of the charging and discharging circuit as shown in FIG. 6, the turned-on S1, S4, S6, S8, S10, and S12 in the first discharging loop shown in FIG. 5 are turned off, and S2, S3, S5, S7, S9, and S11 are turned on. The formed first charging loop includes a loop among battery 1, switch S2, windings A1, B1, and C1, switches S3 and S5, and a loop among battery 1, switch S2, winding A1, windings A2, B2, and C2, and switches S7, S9, and S11. The flow directions of the current in the above formed first charging loop are shown by arrows in FIG. 6, that is, negative terminal of battery 1→S2→winding A1→windings B1 and C1→S3 and S5→positive terminal of battery 1, and negative terminal of battery 1→S2→winding A1→windings A2, B2, and C2→S7, S9, and S11→positive terminal of battery 1.

In the embodiments, by controlling the switching of the bridge arm switches in the first motor controller and the second motor controller, the electrical energy in energy-storing windings in the first discharging loop is fed back into the battery, and the first charging loop and the first discharging loop together result in an alternating current flowing through the battery. As a result, the internal resistance of the battery generates heat, thereby achieving the effect of battery heating. Furthermore, all the turned-on switches in the first charging loop are the turned-off switches in the bridge arms where the turned-on switches in the first discharging loop are located, such that in one charge-discharge cycle composed of the first discharging loop and the first charging loop, the upper bridge arm and the lower bridge arm of the same bridge arm are used at the same frequency, thereby reducing the risk of damage to the more frequently used switches in the same bridge arm due to difference in switching frequency among the switches of the same bridge arm.

In some other embodiments of the present application, during execution of the first charging mode, all the turned-on upper bridge arms and the turned-on lower bridge arms during execution of the first discharging mode may also be controlled to be turned off, and no additional switches are controlled to be turned on. The current loop is formed by using freewheeling diodes included in the switches in the motor controllers. The first charging loop formed in this way includes the battery, the freewheeling diodes of the lower bridge arms in the bridge arms where the turned-on upper bridge arms in the first discharging mode are located, the freewheeling diodes of the upper bridge arms in the bridge arms where the turned-on lower bridge arms in the first discharging mode are located, and the windings in the first motor and the second motor connected to the bridge arms where the freewheeling diodes are located.

The bridge arm of the motor controller includes an upper bridge arm and a lower bridge arm. The upper bridge arm and the lower bridge arm each include a switch, and the switch includes a switch and a freewheeling diode that are connected in parallel. The freewheeling diode has a cathode and an anode, and is characterized in that current is conducted from the anode to the cathode and blocked from the cathode to the anode.

In the embodiments, all turned-on switches in the first discharging loop are turned off, and no additional switches are turned on. Since windings that store electrical energy exist in the first motor and the second motor, the potential of the windings is higher than that of the battery. In addition, freewheeling diodes are connected to the bridge arms that are connected between the windings in the first motor controller and the negative terminal of the battery, and the anodes of the freewheeling diodes are connected to the negative terminal of the battery. Therefore, under the action of the potential difference, a current, that flows through the negative terminal of the battery, the windings, and the freewheeling diodes in the bridge arm switches that are connected between the windings and the negative terminal of the battery, and finally flows toward the positive terminal of the battery, is formed, thereby forming the first charging loop.

The first charging loop formed in this way includes two loops. The direction of the current in one of the loops is: negative terminal of the battery→freewheeling diodes of the lower bridge arms in the bridge arms where the turned-on upper bridge arms in the first discharging mode are located→windings in the first motor connected to the turned-on upper bridge arms or lower bridge arms in the first discharging mode→freewheeling diodes of the upper bridge arms in the bridge arms where the turned-on lower bridge arms in the first discharging mode are located→positive terminal of the battery. The direction the current in the other loop is: negative terminal of the battery →freewheeling diodes of the lower bridge arms in the bridge arms where the turned-on upper bridge arms in the first discharging mode are located→windings in the first motor connected to the turned-on upper bridge arms in the first discharging mode→windings in the second motor connected to the turned-on lower bridge arms in the second motor controller in the first discharging mode→freewheeling diodes of the upper bridge arms in the bridge arms where the turned-on lower bridge arms in the second motor controller in the first discharging mode are located→positive terminal of the battery.

To facilitate understanding of the flow directions of the current in the first charging loop, the flow direction is described below with reference to the drawings. In the schematic diagram of the charging and discharging circuit as shown in FIG. 7, the turned-on S1, S4, S6, S8, S10, and S12 in the first discharging loop shown in FIG. 5 are turned off. The formed first charging loop includes a loop among battery 1, freewheeling diode D2, windings A1, B1, and C1, and freewheeling diodes D3 and D5, and a loop among battery 1, D2, winding A1, windings A2, B2, and C2, and freewheeling diodes D7, D9, and D11. The flow directions of the current in the above formed first charging loop are shown by arrows in FIG. 7, that is, negative terminal of battery 1→D2→winding A1→windings B1 and C1→D3 and D5→positive terminal of battery 1, and negative terminal of battery 1→D2→winding A1→windings A2, B2, and C2→D7, D9, and D11→positive terminal of battery 1.

In forming the first charging loop in the embodiments, the switches in the motor controllers are not required to be turned on, and the freewheeling diodes in the switches are used to form the first charging loop, resulting in a simpler control manner. In the formed first charging loop, the electrical energy stored in the windings is fed back into the battery, such that the direction of the current flowing through the battery is changed from flowing from the positive terminal to the negative terminal to flowing from the negative terminal to the positive terminal, thereby forming an alternating current flowing through the battery. As a result, the internal resistance of the battery generates heat, thereby achieving the effect of battery heating.

For the solutions where the first discharging loop and the first charging loop include two loops in the above embodiments, the first discharging loop and the first charging loop may be formed cyclically, such that an alternating current is generated in the circuit where the battery is located. As a result, the internal resistance of the battery generates heat, thereby achieving the effect of current heating.

In some other embodiments, the above control manner of the first motor controller may also be interchanged with the control manner of the second motor controller, thereby forming a first discharging loop and a first charging loop with different structures.

As an example, during the process of forming the first discharging loop, the upper bridge arm of at least one second bridge arm in the second motor controller is controlled to be turned on, the lower bridge arm of at least one second bridge arm, excluding the second bridge arms whose upper bridge arms are turned on, in the second motor controller is controlled to be turned on, and the lower bridge arm of at least one first bridge arm in the first motor controller is controlled to be turned on. The formed first discharging loop includes a loop among the battery, the turned-on upper bridge arm in the second motor controller and the winding in the second motor connected to the turned-on upper bridge arm, and the turned-on lower bridge arm in the first motor controller and the winding in the first motor connected to the turned-on lower bridge arm, and a loop among the battery, the turned-on upper bridge arm in the second motor controller and the winding connected to the turned-on upper bridge arm, and the turned-on lower bridge arm in the second motor controller 5 and the winding in the second motor connected to the turned-on lower bridge arm.

As shown in FIG. 8, S2, S3, S5, S7, S9, and S11 are turned on. In this case, the formed first discharging loop includes a loop among battery 1, S7, S9, S11, windings A2, B2, and C2, winding A1, and S2, and a loop among battery 1, S3, S5, windings A1, B1, and C1, and switch S2. The directions of the current in the above formed first discharging loop are shown by arrows in FIG. 8, that is, positive terminal of battery 1→S7, S9, and S11→windings A2, B2, and C2→winding A1→S2→negative terminal of battery 1, and positive terminal of battery 1→S3 and S5→windings B1 and C1→winding A1→S2→negative terminal of battery 1.

Accordingly, during the process of forming the first charging loop, all turned-on bridge arm switches in the above first discharging loop are controlled to be turned off, the lower bridge arms of the bridge arms where the turned-on upper bridge arms in the first discharging loop are located are controlled to be turned on, and the upper bridge arms of the bridge arms where the turned-on lower bridge arms in the first discharging loop are located are controlled to be turned on. The formed first charging loop includes the battery, the turned-on lower bridge arms in the first motor controller and the windings in the first motor connected to the turned-on lower bridge arms, and the turned-on upper bridge arms in the first motor controller and the windings in the first motor connected to the turned-on upper bridge arms, and a loop among the battery, the turned-on lower bridge arms in the second motor controller and the windings in the second motor connected to the turned-on lower bridge arms, and the turned-on upper bridge arms in the first motor controller and the windings in the first motor connected to the turned-on upper bridge arms.

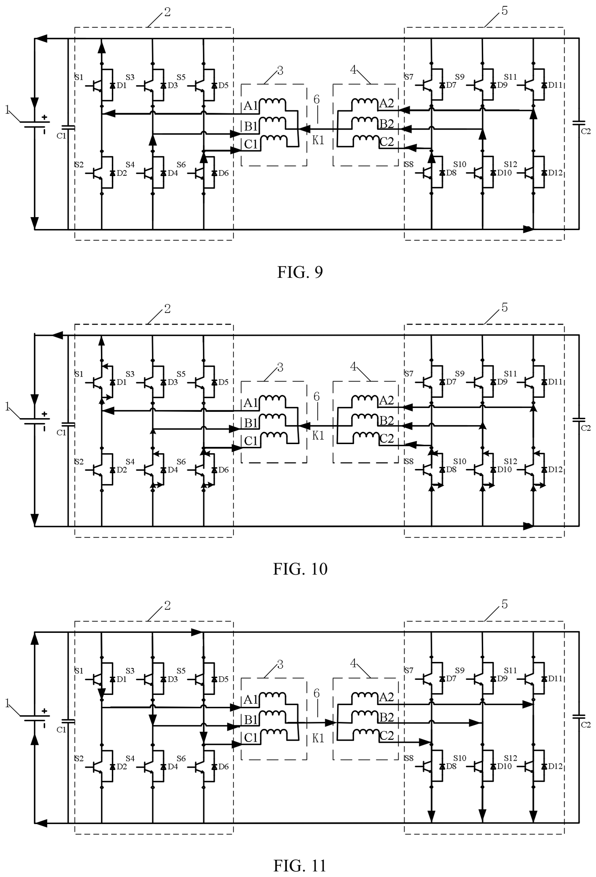

In the schematic diagram of the charging and discharging circuit as shown in FIG. 9, the turned-on S2, S3, S5, S7, S9, and S11 in the first discharging loop shown in FIG. 8 are turned off. S1, S4, S6, S8, S10, and S12 are turned on. The formed first charging loop includes a loop among battery 1, S4, S6, windings A1, B1, C1, and S1, and a loop among battery 1, switches S8, S10, and S12, windings A2, B2, and C2, winding A1, and switch S1. The directions of the current in the above formed first charging loop are shown by arrows in FIG. 9, that is, negative terminal of battery 1→S4 and S6→windings B1 and C1→winding A1→S1→positive terminal of battery 1, and negative terminal of battery 1→S8, S10, and S12→windings A2, B2, and C2→winding A1→S1→positive terminal of battery 1.

During the above process of forming the first charging loop, all turned-on bridge arm switches in the first discharging loop may also be controlled to be turned off, and other switches are not controlled to be turned on. The first charging loop is formed by using freewheeling diodes.

In the schematic diagram of the charging and discharging circuit as shown in FIG. 10, the turned-on S2, S3, S5, S7, S9, and S11 in the first discharging loop shown in FIG. 8 are turned off. The formed first charging loop includes a loop among battery 1, freewheeling diodes D4 and D6, windings A1, B1, and C1, and freewheeling diode D1, and a loop among battery 1, freewheeling diodes D8, D10, and D12, windings A2, B2, and C2, winding A1, and freewheeling diode D1. The directions of the current in the above formed first charging loop are shown by arrows in FIG. 10, that is, negative terminal of battery 1→D4 and D6→windings B1 and C1→winding A1→D1→positive terminal of battery 1, and negative terminal of battery 1→D8, D10, and D12→windings A2, B2, and C2→winding A1→D1→positive terminal of battery 1.

The first discharging loop and the first charging loop may be formed cyclically to generate an alternating current in the circuit where the battery is located, thereby achieving the effect of battery heating.

In some other embodiments of the present application, the first discharging loop, the first charging loop, the second discharging loop, and the second charging loop may also be formed in one heating cycle. Each discharging loop and each charging loop respectively include two loops. The turned-on bridge arm switches in the second discharging loop are the turned-off bridge arm switches in the first discharging loop, and the directions of the currents flowing through the neutral line in the second discharging loop and the first charging loop are opposite. The directions of the currents flowing through the neutral line in the second charging loop and the first discharging loop are opposite. For example, the circuits shown in FIGs. 5, 6, 8, and 9 are cyclically formed.

In the embodiments of the present application, the formation of the discharging loop in the circuit where the battery is located may also be achieved by controlling the upper bridge arms of all bridge arms in the first motor controller to be turned on, and controlling the lower bridge arms of all bridge arms in the second motor controller to be turned on. The formed discharging loop includes the battery, the upper bridge arms of all bridge arms in the first motor controller, all windings of the first motor, all windings of the second motor, and lower bridge arms of all bridge arms in the second motor controller.

As shown in FIG. 11, the switches S1, S3, S5, S8, S10, and S12 are turned on. The flow direction of the current in the formed discharging loop is shown by arrows in FIG. 11. That is, the flow direction of the current is: positive terminal of battery 1→S1, S3, and S5→windings A1, B1, and C1→windings A2, B2, and C2→S8, S10, and S12→negative terminal of battery 1.

In the discharging loop formed in this way, all windings in the first motor and the second motor are incorporated into the discharging loop, and the windings of the first motor and the windings of the second motor are connected in series, such that the total inductance in the discharging loop is extremely large, and more electrical energy can be stored in the discharging loop, thereby improving the heating rate of the battery. Furthermore, all bridge arm switches involved in the first motor controller are connected in parallel, and all bridge arm switches involved in the second motor controller are also connected in parallel. The parallel connection enables current sharing, such that the current flowing through individual switches is relatively small, thereby reducing the risk of overcurrent damage to the switches. In the embodiments, the current flowing through all windings of the first motor flows in the same direction. Therefore, the stator does not generate a rotating magnetic field, which can significantly reduce eddy current losses in the rotor and thus effectively reduce the risk of rotor heating.

In the first discharging loop formed based on the above control manner, when charging of all windings of the first motor and all windings of the second motor by the battery in the discharging loop is completed, the first discharging loop is switched to the first charging loop by controlling the upper bridge arms of all bridge arms in the first motor controller and the lower bridge arms of all bridge arms in the second motor controller to be turned off, controlling the lower bridge arms of all bridge arms in the first motor controller to be turned on, and controlling the upper bridge arms of all bridge arms in the second motor controller to be turned on. The formed discharging loop includes the battery, the lower bridge arms of all bridge arms in the first motor controller, all windings of the first motor, all windings of the second motor, and the upper bridge arms of all bridge arms in the second motor controller.

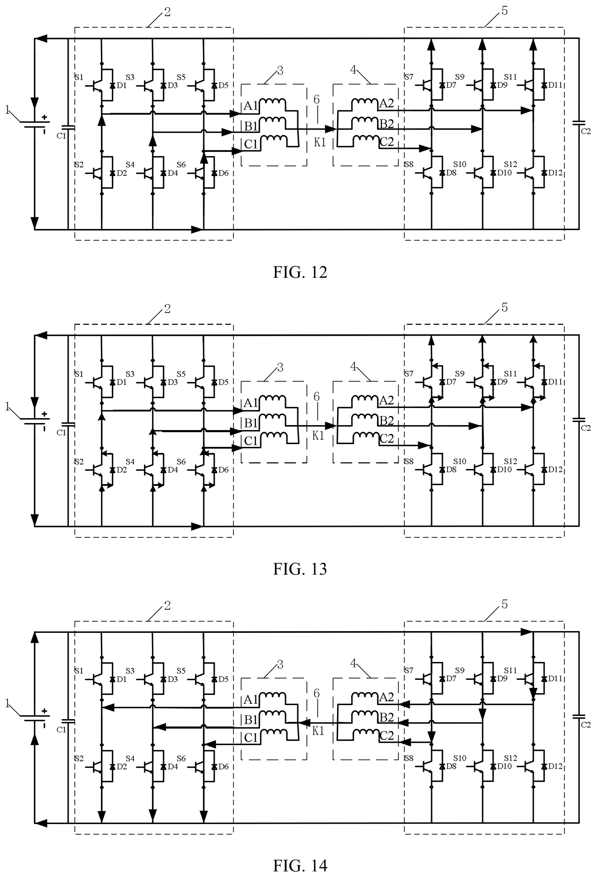

As shown in FIG. 12, switches S1, S3, S5, S8, S10, and S12 are turned off, and switches S2, S4, S6, S7, S9, and S11 are turned on. The flow direction of the current in the formed charging loop is shown by arrows in FIG. 12. That is, the flow direction of the current is: negative terminal of battery 1→S2, S4, and S6→windings A1, B1, and C1→windings A2, B2, and C2→S7, S9, and S11→positive terminal of battery 1.

In some other embodiments, during the process of forming the first charging loop, all upper bridge arms controlled by the first motor and all lower bridge arms of the second motor controller are controlled to be turned off, and other switches may not be controlled to be turned on. The first charging loop is formed by using freewheeling diodes. The first charging loop formed in this way includes the battery, freewheeling diodes in all lower bridge arms of the first motor controller, all windings of the first motor, all windings of the second motor, and freewheeling diodes in all upper bridge arms of the second motor controller.

As shown in FIG. 13, switches S1, S3, S5, S8, S10, and S12 are turned off. The flow direction of the current in the formed charging loop is shown by arrows in FIG. 13. That is, the flow direction of the current is: negative terminal of battery 1→D2, D4, and D6→windings A1, B1, and C1→windings A2, B2, and C2→D7, D9, and D11→positive terminal of battery 1.

In some embodiments, the above formation of the first discharging loop and the first charging loop may be cyclically performed to heat the battery. For example, the loops shown in FIGs. 11 and 12 are cyclically formed.

In some other embodiments, after the formation of the above first charging loop, a second discharging loop may also be formed. The second discharging loop includes the battery, all upper bridge arms of the second motor controller, all bridge arms of the second motor, all bridge arms of the first motor, and all lower bridge arms of the first motor controller. If all upper bridge arms of the second motor controller and all lower bridge arms of the first motor controller have been turned on in the first charging loop, after the electrical energy stored in all windings of the first motor and all windings of the second motor in the first charging loop is fully released, the circuit automatically switches to the second discharging loop due to potential difference between the first motor and the second motor and the battery. If any switch in the above charging loop is not turned on, all upper bridge arms of the second motor controller and all lower bridge arms of the first motor controller are required to be turned on when switching to the second discharging loop.

The flow direction of the current in the second discharging loop formed in this way is: positive terminal of the battery→all upper bridge arms of the second motor controller→all windings of the second motor→all windings of the first motor→all lower bridge arms of the first motor controller→negative terminal of the battery.

As shown in FIG. 14, switches S2, S4, S6, S7, S9, and S11 are turned on. The flow direction of the current in the formed discharging loop is shown by arrows in FIG. 14. That is, the flow direction of the current is: positive terminal of battery 1→S7, S9, and S11→windings A2, B2, and C2→windings A1, B1, and C1→S2, S4, and S6→negative terminal of battery 1.

After charging of all windings of the first motor and all windings of the second motor by the battery in the second discharging loop is completed, the circuit switches to the second charging loop, in which all turned-on bridge arm switches in the second discharging loop are turned off, and all upper bridge arms of the first motor controller and all lower bridge arms of the second motor controller are controlled to be turned on. The formed second charging loop includes the battery, all lower bridge arms of the second motor controller, all windings of the second motor, all windings of the first motor, and all upper bridge arms of the first motor controller.

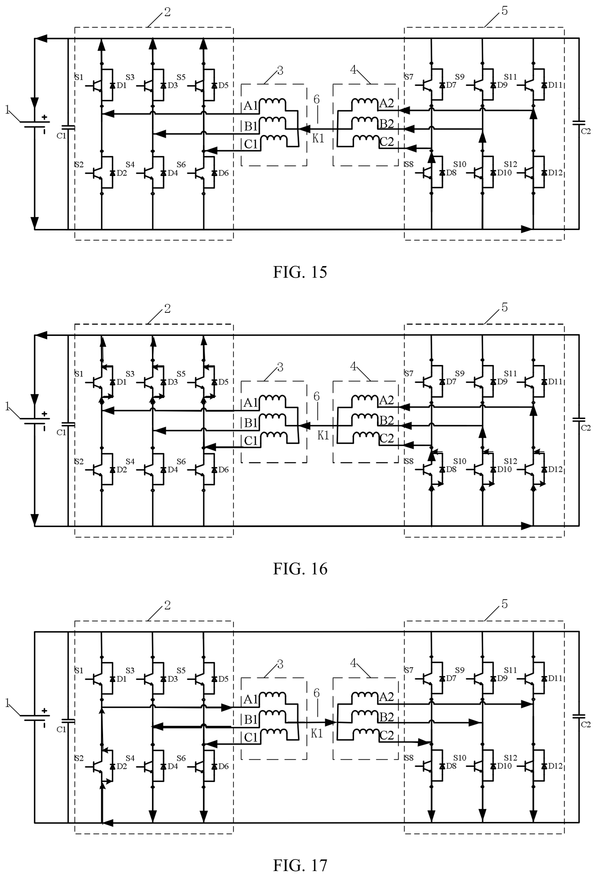

As shown in FIG. 15, switches S2, S4, S6, S7, S9, and S11 are turned off, and switches S1, S3, S5, S8, S10, and S12 are turned on. The flow direction of the current in the formed charging loop is shown by arrows in FIG. 15. That is, the flow direction of the current is: negative terminal of battery 1→S8, S10, and S12→windings A2, B2, and C2→windings A1, B1, and C1→S1, S3, and S5→positive terminal of battery 1.

In another implementation, during the process of forming the second charging loop, all turned-on switches in the second discharging loop may also be turned off, and no additional switches are turned on. The second charging loop is formed by using freewheeling diodes.

As shown in FIG. 16, switches S2, S4, S6, S7, S9, and S11 are turned off. The flow direction of the current in the formed charging loop is shown by arrows in FIG. 16. That is, the flow direction of the current is: negative terminal of battery 1→D8, D10, and D12-windings A2, B2, and C2→windings A1, B1, and C1→ D1, D3, and D5→positive terminal of battery 1.

In some embodiments, the above formation of the second discharging loop and the second charging loop may be cyclically performed to heat the battery. For example, the loops shown in FIGs. 14 and 15 are cyclically formed.

In some other embodiments, the above formation of the first discharging loop, the first charging loop, the second discharging loop, and the second charging loop may also be cyclically performed to heat the battery. For example, the loops shown in FIGs. 11, 12, 14, and 15 are cyclically formed.

The first discharging loop, the first charging loop, the second discharging loop, and the second charging loop are cyclically formed as one heating cycle, such that the switches in the first motor controller and the second motor controller can be used in the same frequency in each cycle, thereby reducing the risk of damage to individual switches due to a relatively high use frequency. In addition, the directions of the currents flowing through the neutral line in the second discharging loop and the first charging loop are opposite, and the directions of the currents flowing through the neutral line in the second charging loop and the first discharging loop are opposite. In this way, the occurrence of current backflow into the windings can be reduced when switching from any one charging loop to the discharging loop during the entire cycle process.

In the embodiments of the present application, the windings in the first motor and the second motor are used to store electrical energy during the discharging process, and the electrical energy stored in the windings is fed back into the battery during the charging process. Due to the characteristic that the windings discharge after being fully charged, the waveform of the alternating current generated during the entire charging and discharge process is approximately a sinusoidal wave or a triangular wave. When the peak current value of the alternating current is relatively large, there is a risk that the current flowing through the components in the loop exceeds the maximum current-carrying capacity of the components. Based on some embodiments of the present application, a discharging loop, a freewheeling loop, and a charging loop that are alternately switched are formed in the circuit where the battery is located. The freewheeling loop includes a winding of the first motor incorporated into the discharging loop and a winding of the second motor incorporated into the discharging loop.

After the battery fully discharges electrical energy into the windings of the motors in the discharging loop, a freewheeling loop between the windings of the two motors is formed. By allowing the current to freewheel, a relatively small amount of electrical energy is consumed, thereby achieving the effect of reducing the peak current value of the alternating current.

The above formation of the freewheeling loop may specifically include: controlling at least one of the currently turned-on bridge arm switches in the first motor controller and the second motor controller to be turned off to form a freewheeling loop between the winding of the first motor incorporated into the discharging loop and the winding of the second motor incorporated into the discharging loop. The directions of the currents flowing through the neutral line between the first motor and the second motor in the freewheeling loop and the discharging loop are the same.

In the discharging loop, the battery releases electrical energy into the winding in the first motor and the winding in the second motor which are incorporated into the loop. After charging of the windings is completed, at least one turned-on bridge arm switch in the discharging loop is controlled to be turned off, thereby forming a freewheeling loop between the winding of the first motor incorporated into the loop and the winding of the second motor incorporated into the loop.

In any one embodiment of the present application, the freewheeling loop may be added between any discharging loop and charging loop, thereby reducing the peak current value by the freewheeling loop.

To facilitate understanding of the solution for forming a freewheeling loop, the solution is described below with reference to the drawings. For the discharging loop shown in FIG. 5, the switch S1 may be turned off, and the flow direction of the current in the formed freewheeling loop is shown by arrows in FIG. 17. That is, the freewheeling loop includes: freewheeling diode D2→winding A1→windings A2, B2 and C2→S8, S10, and S12→D2, and freewheeling diode D2→winding A1→windings B1 and C1→S4 and S6→D2.

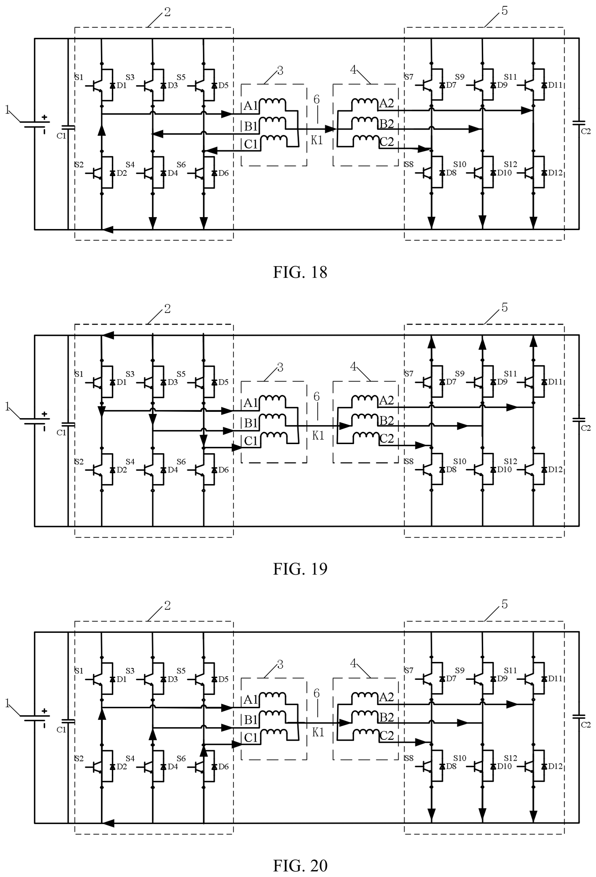

In another implementation, when the switch S1 in the discharging loop shown in FIG. 5 is turned off, S2 may also be closed. The flow direction of the current in the freewheeling loop formed in this way is shown by arrows in FIG. 18. That is, the freewheeling loop includes: S2→winding A1→windings A2, B2 and C2→S8, S10, and S12→S2, and S2→winding A1→windings B1 and C1→S4 and S6→S2.

After the freewheeling loop is formed, the current continuously flows back and forth between the winding of the first motor incorporated into the loop and the winding of the second motor incorporated into the loop. Since the current cyclically flows through the components in the freewheeling loop, a certain degree of electrical energy loss occurs in each component, thereby resulting in a slight decrease in the electrical energy stored in the windings incorporated into the loop, and achieving the effect of reducing the peak current value of the alternating current generated during the charging and discharging process. In one aspect, reducing the peak current value can further reduce overcurrent damage to the components in the loop, and in another aspect, can mitigate the occurrence of excessive noise produced by the first motor and/or the second motor due to a high rate of magnetic field change resulting from excessive peak current.

The process of forming the freewheeling loop is described with the above embodiments in which all upper bridge arms of the first motor controller and all lower bridge arms of the second motor controller are turned on to form the first discharging loop. Based on the formed first discharging loop, when charging of all windings of the first motor and all windings of the second motor by the battery in the discharging loop is completed, the circuit switches to the freewheeling loop. By controlling all upper bridge arms of the first motor controller and all upper bridge arms of the second motor controller to be turned on, a freewheeling loop is formed among all upper bridge arms of the first motor controller, all windings of the first motor, all windings of the second motor, and all upper bridge arms of the second motor controller.

Since all upper bridge arms of the first motor controller and all lower bridge arms of the second motor controller have been turned on in the first discharging loop, all lower bridge arms of the second motor controller may be controlled to be turned off and all upper bridge arms of the second motor controller are controlled to be turned on when switching to the freewheeling loop.

As shown in FIG. 19, the turned-on switches S8, S10, and S12 in the first discharging loop shown in FIG. 11 are turned off, and S7, S9, and S11 are turned on. The flow direction of the current in the formed freewheeling loop is shown by arrows in FIG. 19. That is, the flow direction of the current is: windings A1, B1, and C1→windings A2, B2, and C2→S7, S9, and S11→S1, S3, and S5→windings A1, B1, and C1.

In the formed freewheeling loop described above, the current cyclically flows within the freewheeling loop. Since the switches and windings incorporated into the freewheeling loop inevitably have certain resistance values, electrical energy losses occur during the circulation of current among these components, resulting in a decrease in the total electrical energy stored in all windings of the first motor and all windings of the second motor, thereby reducing the peak current value of the alternating current generated during charging and discharging. Then, the noise of the motors during the battery heating process is mitigated, and the risk of overcurrent damage to the components is reduced.

In some other embodiments, the above formation of the freewheeling loop may also be achieved by controlling all lower bridge arms of the first motor controller and all lower bridge arms of the second motor controller to be turned on when charging of all windings of the first motor and all windings of the second motor by the battery in the discharging loop is completed. In this way, a freewheeling loop among all lower bridge arms of the first motor controller, all windings of the first motor, all windings of the second motor, and all lower bridge arms of the second motor controller is formed.

Since all upper bridge arms of the first motor controller and all lower bridge arms of the second motor controller have been turned on in the first discharging loop, all upper bridge arms of the first motor controller may be controlled to be turned off and all lower bridge arms of the first motor controller are controlled to be turned on when switching to the freewheeling loop.

As shown in FIG. 20, the turn-on switches S1, S3, and S5 in the first discharging loop shown in FIG. 11 are turned off, and S2, S4, and S6 are turned on. The flow direction of the current in the formed freewheeling loop is shown by arrows in FIG. 20. That is, the flow direction of the current is: windings A1, B1, and C1→windings A2, B2, and C2→S8, S10, and S12→S2, S4, and S6→windings A1, B1 and C1.

The embodiments provide another control manner for switching to the freewheeling loop, thereby diversifying the control manners for switching from the first discharging loop to the freewheeling loop. The formed freewheeling loop results in a decrease in the total electrical energy stored in all windings of the first motor and all windings of the second motor, thereby reducing the peak current value of the alternating current generated during charging and discharging. Then, the noise of the motors during the battery heating process is mitigated, and the risk of overcurrent damage to the components is reduced.

By forming the freewheeling loop in the above manner, the circuit switches to the charging loop after the freewheeling loop is maintained for a certain duration. Specifically, when freewheeling in the freewheeling loop ends, the upper bridge arms of all bridge arms in the first motor controller are controlled to be turned off and the lower bridge arms of all the bridge arms are controlled to be turned on, and the lower bridge arms of all bridge arms in the second motor controller are controlled to be turned off and the upper bridge arms of all the bridge arms are controlled to be turned on. The formed charging loop includes the battery, the lower bridge arms of all bridge arms in the first motor controller, all windings of the first motor, all windings of the second motor, and the upper bridge arms of all bridge arms in the second motor controller. For example, the circuit switches from the freewheeling loop shown in FIG.19 or 20 to the charging loop shown in FIG.12.

By switching from the freewheeling loop to the charging loop after freewheeling, the total electrical energy in all windings at the starting point of discharging through the windings in the charging loop is not excessively high, such that the peak current value is not excessively high, thereby reducing the risk of overcurrent damage to the components in the loop, and reducing the noise of the motors during the charging and discharging process. In the charging loop, the current flowing through all windings of the first motor flows in the same direction. Therefore, the stator does not generate a rotating magnetic field, which can significantly reduce eddy current losses in the rotor and thus effectively reduce the risk of rotor heating.

In some other embodiments of the present application, when freewheeling in the freewheeling loop ends, the charging loop may also be formed by controlling the upper bridge arms of all bridge arms in the first motor controller to be turned off and controlling the lower bridge arms of all bridge arms in the second motor controller to be turned off. The formed charging loop includes the battery, freewheeling diodes of the lower bridge arms of all bridge arms in the first motor controller, all windings of the first motor, all windings of the second motor, and freewheeling diodes of the upper bridge arms of all bridge arms in the second motor controller.

By forming the charging loop in this manner, the freewheeling diodes in the switches of the motor controllers are fully utilized. The turned-on switches in the freewheeling loop are turned off, and no additional switches are turned on, resulting in a simpler and more efficient control manner that reduces the number of switching operations and can extend the service life of the switches. In the charging loop, the current flowing through all windings of the first motor flows in the same direction. Therefore, the stator does not generate a rotating magnetic field, which significantly reduces eddy current losses in the rotor and thus effectively reduces the risk of rotor heating.

In some embodiments of the present application, when a heating stop condition is satisfied, the connection circuit between the neutral point of the first motor and the neutral point of the second motor is controlled to be disabled, thereby switching from the battery heating mode to the driving mode.

During the battery heating process, the control module further detects in real time whether a heating stop condition is satisfied. The heating stop condition may include, but is not limited to, battery temperature reaching a preset required heating temperature, the presence of a faulty component in the circuit, reception of a driving command, and the like. The control module, when detecting that the heating stop condition is satisfied, disables the connection circuit between the neutral point of the first motor and the neutral point of the second motor.

By disabling the connection circuit between the neutral point of the first motor and the neutral point of the second motor, the battery heating mode can be stopped, and the first motor and the second motor can be restored to a parallel configuration. The control manner is simple and allows for rapid switching between series and parallel connections of the first motor and the second motor, thereby reducing the delay in using the device by the user due to battery heating. In the event of a component fault in the circuit, the charging and discharging loops can also be promptly disabled to prevent damage to other components in the circuit.

In the embodiments of the present application, the connection circuit between the neutral point of the first motor and the neutral point of the second motor is activated when battery heating is required, such that the first motor and the second motor are connected in series, thereby enabling flexible switching between the driving mode and the battery heating mode through the switches in the connection circuit. By controlling the switching of the bridge arms in the first motor controller and the second motor controller, windings in the first motor and the second motor can be connected in series and incorporated into the formed discharging loop or charging loop, such that the total inductance of the windings incorporated into the loop is increased, thereby increasing the electrical energy stored in the windings incorporated into the discharging loop. The stored electrical energy is then fed back into the battery via the charging loop. The alternate switching between the discharging loop and the charging loop allows the battery to generate more heat within a unit time, thereby effectively improving battery heating efficiency. Furthermore, in the embodiments of the present application, a freewheeling loop may also be added between the discharging loop and the charging loop. The freewheeling loop results in a decrease in the peak current value of the alternating current generated during charging and discharging, thereby mitigating the noise of the motors during the battery heating process and reducing the risk of overcurrent damage to the components. Further, in the solution where the current flowing through all windings of the first motor flows in the same direction and the current flowing through all windings of the second motor flows in the same direction, the stator does not generate a rotating magnetic field, which can significantly reduce eddy current losses in the rotor and thus effectively reduce the risk of rotor heating.

The differences between the above embodiments are highlighted in the description of these embodiments, and reference may be made to each other for the identical or similar parts. For brevity, the details are not described herein again.

The charge and discharge control process is described below by taking a specific example. In the specific example, the first motor and the second motor are both three-phase motors, and the first motor controller and the second motor control also each have three bridge arms. A connection circuit is connected between the neutral point of the first motor and the center point of the second motor, and the connection circuit includes switch K1. The schematic diagram of the circuit of the dual-motor architecture according to the specific example is shown in FIG. 2. The specific steps of the charge and discharge control process according to the specific example are described below with reference to a plurality of drawings.

Step 1: It is detected that a battery heating condition is currently satisfied.

Step 2: The switch K1 in the connection circuit connected between the neutral point of the first motor and the neutral point of the second motor is closed.

Step 3: The upper bridge arms S1, S3, and S5 in the first motor controller are closed, and the lower bridge arm switches S8, S10, and S12 in the second motor controller are closed to form a discharging loop.

In the discharging loop, the battery releases electrical energy into the windings A1, B1, and C1 of the first motor and the windings A2, B2, and C2 of the second motor, and the flow direction of the current is shown in FIG. 11. After charging of all windings in the first motor and the second motor is completed, the following step 4 is executed.

Step 4: The lower bridge arm switches S8, S10, and S12 in the second motor controller are turned off, and S7, S9, and S11 in the second motor controller are closed to form a freewheeling loop.

In the freewheeling loop, a circulating current is generated between the windings A1, B1, and C1 of the first motor and the windings A2, B2, and C2 of the second motor, and the current is sustained during the freewheeling process. The flow direction of the current is shown in FIG. 19.

In another implementation, in step 4, S7, S9, and S11 may not be turned on, and the freewheeling loop is formed by using the freewheeling diodes D7, D9, and D11.

Step 5: After a period of time of freewheeling, S1, S3, and S5 are turned off, and the lower bridge arm switches S2, S4, and S6 in the first motor controller are turned on to form a charging loop.

In the charging loop, the electrical energy stored in the windings A1, B1, and C1 of the first motor and the windings A2, B2, and C2 of the second motor is released into the battery. The flow direction of the current in the formed charging loop is shown by arrows in FIG. 12.

In one implementation, in step 5, S2, S4, and S6 may not be closed, and the charging loop is formed by using the freewheeling diodes D2, D4, and D6 as well as the closed S7, S9, and S11 in step 4.

In another implementation, if S7, S9, and S11 are not closed in step 4, the charging loop may also be formed in step 5 by using the freewheeling diodes D2, D4, D6, D7, D9, and D11.

Step 6: After the electrical energy stored in the windings of the motors in the charging loop is fully released, the lower bridge arm switches S2, S4, and S6 of the first motor controller are closed, and the upper bridge arm switches S7, S9, and S11 of the second motor controller are closed to form a discharging loop.

If S2, S4, S6, S7, S9, and S11 have been closed in step 5, the discharging loop of step 6 is automatically formed under the influence of the potential difference after the electrical energy stored in the windings of the motors in the charging loop is fully released, and no switches are required to be closed in step 6. In the formed discharging circuit, the windings of the motors are charged by the battery, and the flow direction of the current is shown in FIG. 14. After charging of the windings of the motors is completed, the following step 7 is executed.

Step 7: The upper bridge arm switches S7, S9, and S11 of the second motor controller are turned off, and the lower bridge arm switches S2, S4, S6, S8, S10, and S12 are closed to form a freewheeling loop.

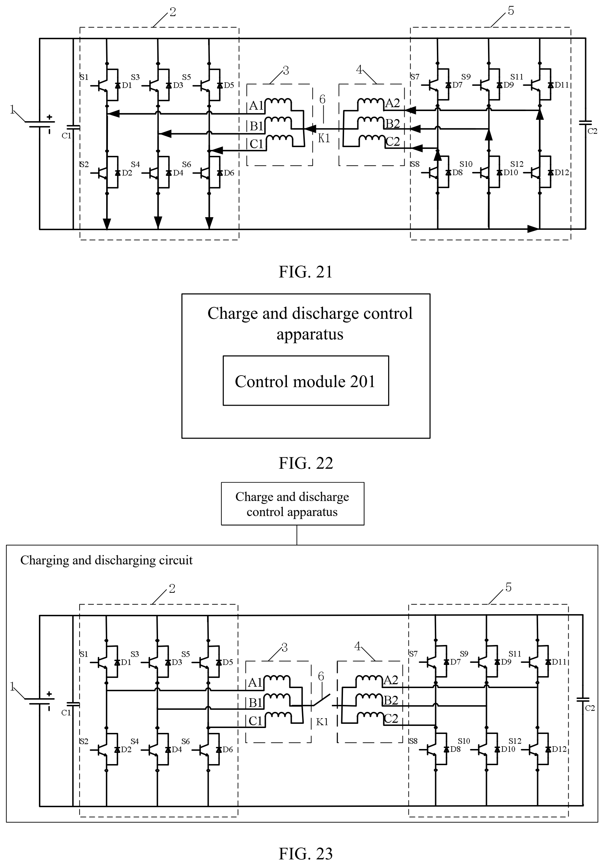

In the freewheeling loop, a circulating current is generated between the windings A1, B1, and C1 of the first motor and the windings A2, B2, and C2 of the second motor, and the current is sustained during the freewheeling process. The flow direction of the current is shown in FIG. 21.

In another implementation, in step 7, S8, S10, and S12 may not be turned on, and the freewheeling loop is formed by using the freewheeling diodes D8, D10, and D12.

Step 8: After a period of time of freewheeling, S2, S4, and S6 are turned off, and the upper bridge arm switches S1, S3, and S5 of the first motor controller and the lower bridge arm switches S8, S10, and S12 of the second motor controller are closed to form a charging loop.

In the charging loop, the electrical energy stored in the windings A1, B1, and C1 of the first motor and the windings A2, B2, and C2 of the second motor is released into the battery. The flow direction of the current in the formed charging loop is shown by arrows in FIG. 15.

In one implementation, in step 8, S1, S3, and S5 may not be closed, and the charging loop is formed by using the freewheeling diodes D1, D3, and D5 as well as the closed S8, S10, and S12 in step 7.

In another implementation, if S8, S10, and S12 are not closed in step 7, the charging loop may also be formed in step 8 by using the freewheeling diodes D1, D3, D5, D8, D10, and D12.

Step 9: The above steps 3, 4, 5, 6, 7, and 8 are repeated to complete self-heating of the battery.

In another implementation, the self-heating of the battery may also be completed by repeating steps 3, 4, and 5 only, or performing steps 6, 7, and 8 only.

Step 10: When it is detected that a heating stop condition is satisfied, the switch K1 in the connection circuit connected between the neutral point of the first motor and the neutral point of the second motor is turned off.

In the specific example, the switch K1 in the connection circuit is closed when battery heating is required, enabling convenient and rapid switching to the battery heating mode. By controlling all upper bridge arms or all lower bridge arms in the same motor controller to be synchronously turned on or synchronously turned off, all windings of the first motor and all windings of the second motor are connected in series and incorporated into the formed discharging loop or the formed charging loop, such that the total inductance of the windings incorporated into the loop is increased, thereby increasing the electrical energy stored in the windings incorporated into the discharging loop, and thus effectively improving the battery heating efficiency. Furthermore, a freewheeling loop is added between the discharging loop and the charging loop. The freewheeling loop results in a decrease in the peak current value of the alternating current generated during charging and discharging, thereby mitigating the noise of the motors during the battery heating process and reducing the risk of overcurrent damage to the components. In addition, since the current flowing through all windings of the first motor flows in the same direction and the current flowing through all windings of the second motor flows in the same direction, the stator does not generate a rotating magnetic field, which can significantly reduce eddy current losses in the rotor and thus effectively reduce the risk of rotor heating.

The differences between the above embodiments are highlighted in the description of these embodiments, and reference may be made to each other for the identical or similar parts. For brevity, the details are not described herein again.

As shown in FIG. 22, another embodiment of the present application provides a charge and discharge control apparatus. The charge and discharge control apparatus is configured to execute the charge and discharge control method according to any one of the above embodiments. The charge and discharge control apparatus includes:

a control module 201, configured to, when a battery heating condition is satisfied, activate a connection circuit between a neutral point of a first motor and a neutral point of a second motor, where a first motor controller connected to the first motor and a second motor controller connected to the second motor are both connected between a positive terminal and a negative terminal of a battery; and control switching of bridge arms in the first motor controller and the second motor controller to form a charging loop and a discharging loop that are alternately switched in a circuit where the battery is located.

For specific operation details of the control module 201 and technical effects that can be achieved, reference may be made to the details and effects of the control means provided in the above method embodiments, and the details are not described herein again.

The charge and discharge control apparatus provided in the embodiments of the present application shares the same inventive concept as the methods provided in the embodiments of the present application, and achieves the same beneficial effects as those of the methods adopted, executed, or implemented by the charge and discharge control apparatus.

The differences between the above embodiments are highlighted in the description of these embodiments, and reference may be made to each other for the identical or similar parts. For brevity, the details are not described herein again.

Another embodiment of the present application provides an electric device. The electric device includes a battery, a first motor, a second motor, a first motor controller, a second motor controller, a connection circuit, and the charge and discharge control apparatus according to the above embodiments.

The first motor controller and the second motor controller are connected in parallel between the positive terminal and the negative terminal of the battery.

The connection points of the upper and lower bridge arms of each bridge arm of the first motor controller are respectively connected to the windings of the first motor in a one-to-one correspondence manner, and the connection points of the upper and lower bridge arms of each bridge arm of the second motor controller are respectively connected to the windings of the second motor in a one-to-one correspondence manner. The connection circuit is connected between the neutral point of the first motor and the neutral point of the second motor.

The charge and discharge control apparatus is connected to the connection circuit, the first motor controller, and the second motor controller.

The battery, the first motor, the second motor, the connection circuit, the first motor controller, and the second motor controller constitute a charging and discharging circuit. FIG. 23 illustrates a schematic diagram of an electric device by taking the above circuit shown in FIG. 2 as an example of the charging and discharging circuit.

The electric device provided in the embodiments of the present application shares the same inventive concept as the methods provided in the embodiments of the present application, and achieves the same beneficial effects as those of the methods adopted, performed, or implemented by the electric device.

The differences between the above embodiments are highlighted in the description of these embodiments, and reference may be made to each other for the identical or similar parts. For brevity, the details are not described herein again.

Another embodiment of the present application provides a computing device. The computing device includes a memory, a processor, and a computer program stored in the memory and executable by the processor. The processor executes the program to implement the charge and discharge control method according to any one of the above implementations. The computing device includes, but is not limited to, a full-vehicle controller, a domain controller, and the like.

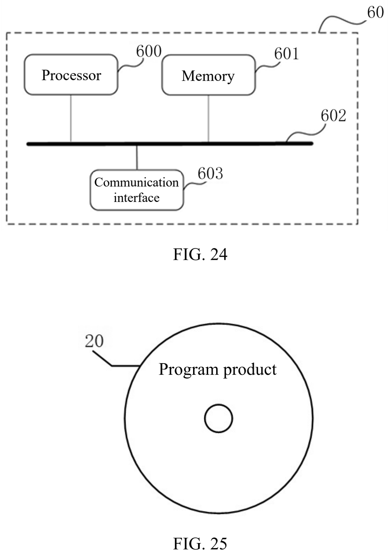

As shown in FIG. 24, the computing device 60 may include: a processor 600, a memory 601, a bus 602, and a communication interface 603. The processor 600, the communication interface 603, and the memory 601 are connected through the bus 602. The memory 601 stores a computer program executable by the processor 600. The processor 600, when executing the computer program, implements the method provided in any one of the above implementations of the present application.

The memory 601 may include a high-speed random access memory (RAM), and may also include a non-volatile memory, for example, at least one magnetic disk memory. The communication connection between a system network element and at least one another network element is achieved through at least one communication interface 603 (which may be wired or wireless), and the Internet, a wide area network, a local network, a metropolitan area network, or the like may be used.

The bus 602 may be an ISA bus, a PCI bus, an EISA bus, or the like. The bus may be classified into an address bus, a data bus, a control bus, and the like. The memory 601 is configured to store a program. The processor 600, after receiving an execution instruction, executes the program. The method disclosed in any one of the above implementations of the embodiments of the present application may be applied to the processor 600, or may be implemented by the processor 600.

The processor 600 may be an integrated circuit chip with a signal processing capability. During the implementation process, the steps in the above methods may be implemented via an integrated logic circuit of hardware in the processor 600, or via an instruction in the form of software. The processor 600 may be a general-purpose processor, which may include a central processing unit (CPU), a network processor (NP), or the like. Alternatively, the processor may be a digital signal processor (DSP), an application specific integrated circuit (ASIC), a field programmable gate array (FPGA) or other programmable logic devices, a discrete gate or a transistor logic device, or a discrete hardware component. The processor can implement or execute the methods, steps, and logic block diagrams disclosed in the embodiments of the present application. The general-purpose processor may be a microprocessor or the processor may be any conventional processor. The steps of the methods disclosed in the embodiments of the present application may be directly executed by a hardware-based decoding processor, or may be executed by a combination of hardware and software modules in the decoding processor. The software module may be located in a mature storage medium in the art, such as a random access memory, a flash memory, a read-only memory, a programmable read-only memory, an electrically erasable programmable memory, and a register. The storage medium resides in the memory 601. The processor 600 reads information in the memory 601 and completes the steps in the above methods in combination with the hardware thereof.

The computing device provided in the embodiments of the present application shares the same inventive concept as the methods provided in the embodiments of the present application, and achieves the same beneficial effects as those of the methods adopted, executed, or implemented by the computing device.

Another embodiment of the present application provides a computer-readable storage medium having a computer program stored thereon. The program, when executed by a processor, causes the processor to implement the method according to any one of the above implementations.

Referring to FIG. 25, the computer-readable storage medium shown in the figure is an optical disk 20 having a computer program (i.e., a program product) stored thereon. The computer program, when executed by a processor, causes the processor to implement the method according to any one of the above implementations.

It should be noted that examples of the computer-readable storage medium may further include, but are not limited to, a phase-change random access memory (PRAM), a static random access memory (SRAM), a dynamic random access memory (DRAM), random access memory (RAM) of another type, a read-only memory (ROM), an electrically erasable programmable read-only memory (EEPROM), a flash memory, or other optical or magnetic storage media. The details are not described herein again.

Another embodiment of the present application provides a computer program product. The computer program product includes a computer program. The computer program, when executed by a processor, causes the processor to implement the method according to any one of the above implementations.

The computer-readable storage medium and the computer program product provided in the above embodiments of the present application share the same inventive concept as the methods provided in the embodiments of the present application, and achieve the same beneficial effects as those of the methods adopted, executed, or implemented by the application programs stored on the computer-readable storage medium and the computer program product.

The differences between the above embodiments are highlighted in the description of these embodiments, and reference may be made to each other for the identical or similar parts. For brevity, the details are not described herein again.

It should be noted that:
The term "module" is not intended to be limited to a particular physical form. Depending on the specific application, the module may be implemented as hardware, firmware, software, and/or a combination thereof. In addition, different modules may share common components or even be implemented by the same component. Clear boundaries may exist or not exist among different modules.

The algorithms and displays provided herein are not inherently related to any particular computer, virtual apparatus, or other devices. Various general-purpose apparatuses may also be used based on the examples herein. According to the above description, the structure required for the construction of such apparatuses is apparent. In addition, the present application is not specific to any particular programming language. It should be understood that the content of the present application described herein can be implemented using a variety of programming languages, and the above description made for the specific language is intended to disclose the best implementation of the present application.

It should be understood that although the steps in the flowcharts of the drawings are displayed sequentially according to the direction of the arrows, these steps are not necessarily executed in the order indicated by the arrows. Unless explicitly stated herein, there is no strict sequential limitation on the execution of these steps, and they can be executed in other orders. Furthermore, at least part of the steps in the flowcharts of the drawings may include a plurality of substeps or stages. These substeps and stages are not necessarily executed at the same time but can be executed at different times. The execution order of these substeps or stages is not necessarily sequential; they can be executed in turn or alternately with other steps or at least part of the substeps or stages in other steps.

The above embodiments merely illustrate implementations of the present application, which are described in a specific and detailed manner, but should not be construed as limiting the patent scope of the present application. It should be noted that various changes and modifications can be made by those skilled in the art without departing from the concept of the present application, and these changes and modifications all shall fall within the protection scope of the present application. Therefore, the protection scope of the present application should be subject to the appended claims.

## Claims

1. A charge and discharge control method, comprising:
when a battery heating condition is satisfied, activating a connection circuit between a neutral point of a first motor and a neutral point of a second motor, wherein a first motor controller connected to the first motor and a second motor controller connected to the second motor are both connected between a positive terminal and a negative terminal of a battery; and
controlling switching of bridge arms in the first motor controller and the second motor controller to form a charging loop and a discharging loop that are alternately switched in a circuit where the battery is located.

2. The method according to claim 1, wherein forming the charging loop and the discharging loop that are alternately switched in the circuit where the battery is located comprises:
in the circuit where the battery is located, alternately forming a discharging loop where the battery discharges electrical energy into windings in the first motor and the second motor, and a charging loop where electrical energy from the windings in the first motor and the second motor is fed back into the battery.

3. The method according to claim 1 or 2, wherein controlling the switching of the bridge arms in the first motor controller and the second motor controller to form the charging loop and the discharging loop that are alternately switched in the circuit where the battery is located comprises:
alternately executing a first discharging mode and a first charging mode to alternately switch between a first discharging loop and a first charging loop in the circuit where the battery is located,
wherein the first discharging mode and the first charging mode are configured to control the switching of the bridge arms in the first motor controller and the second motor controller; in the first discharging loop and the first charging loop, directions of currents flowing through the battery are opposite, and directions of currents flowing through a neutral line between the first motor and the second motor are the same.

4. The method according to claim 3, wherein controlling the switching of the bridge arms in the first motor controller and the second motor controller to form the charging loop and the discharging loop that are alternately switched in the circuit where the battery is located comprises:
cyclically executing the first discharging mode, the first charging mode, a second discharging mode, and a second charging mode to cyclically switch among the first discharging loop, the first charging loop, a second discharging loop, and a second charging loop in the circuit where the battery is located,
wherein the second discharging mode and the second charging mode are configured to control the switching of the bridge arms in the first motor controller and the second motor controller; bridge arm switches turned on in the second discharging loop are bridge arm switches turned off in the first discharging loop; directions of currents flowing through the neutral line in the second discharging loop and the first charging loop are opposite; directions of currents flowing through the neutral line in the second charging loop and the first discharging loop are opposite.

5. The method according to claim 3 or 4, wherein executing the first discharging mode to form the first discharging loop in the circuit where the battery is located comprises:
controlling an upper bridge arm of at least one first bridge arm in the first motor controller to be turned on, and controlling a lower bridge arm of at least one second bridge arm in the second motor controller to be turned on,
wherein the formed first discharging loop comprises the battery, the turned-on upper bridge arm in the first motor controller and a winding in the first motor connected to the turned-on upper bridge arm, and the turned-on lower bridge arm in the second motor controller and a winding in the second motor connected to the turned-on lower bridge arm.

6. The method according to claim 5, wherein executing the first charging mode to form the first charging loop in the circuit where the battery is located comprises:
controlling both the turned-on upper bridge arm and the turned-on lower bridge arm during execution of the first discharging mode to be turned off, and controlling a lower bridge arm of the at least one first bridge arm and an upper bridge arm of the at least one second bridge arm to be turned on,
wherein the formed first charging loop comprises the battery, the turned-on lower bridge arm in the first motor controller and a winding in the first motor connected to the turned-on lower bridge arm, and the turned-on upper bridge arm in the second motor controller and a winding in the second motor connected to the turned-on upper bridge arm.

7. The method according to claim 5, wherein executing the first charging mode to form the first charging loop in the circuit where the battery is located comprises:
controlling both the turned-on upper bridge arm and the turned-on lower bridge arm during execution of the first discharging mode to be turned off,
wherein the formed first charging loop comprises the battery, a freewheeling diode in the lower bridge arm of the at least one first bridge arm, a winding in the first motor connected to the at least one first bridge arm, a winding in the second motor connected to the at least one second bridge arm, and a freewheeling diode in an upper bridge arm of the at least one second bridge arm.

8. The method according to claim 3 or 4, wherein executing the first discharging mode to form the first discharging loop in the circuit where the battery is located comprises:
controlling an upper bridge arm of at least one first bridge arm in the first motor controller to be turned on, controlling a lower bridge arm of at least one first bridge arm, excluding the first bridge arms whose upper bridge arms are turned on, in the first motor controller, and controlling a lower bridge arm of at least one second bridge arm in the second motor controller to be turned on,
wherein the formed first discharging loop comprises a loop among the battery, the turned-on upper bridge arm in the first motor controller and a winding in the first motor connected to the turned-on upper bridge arm, and the turned-on lower bridge arm in the second motor controller and a winding in the second motor connected to the turned-on lower bridge arm, and a loop among the battery, the turned-on upper bridge arm in the first motor controller and a winding connected to the turned-on upper bridge arm, and the turned-on lower bridge arm in the first motor controller and a winding in the first motor connected to the turned-on lower bridge arm.

9. The method according to claim 8, wherein executing the first charging mode to form the first charging loop in the circuit where the battery is located comprises:
for the bridge arm where the turned-on upper bridge arm in the first motor controller during execution of the first discharging mode is located, controlling the upper bridge arm to be turned off and the lower bridge arm to be turned on; for the bridge arm where the turned-on lower bridge arm in the first motor controller during execution of the first discharging mode is located, controlling the lower bridge arm to be turned off and the upper bridge arm to be turned on; and for the bridge arm where the turned-on lower bridge arm during execution of the first discharging mode controlled by the second motor is located, controlling the lower bridge arm to be turned off and the upper bridge arm to be turned on.
wherein the formed first charging loop comprises a loop among the battery, the turned-on lower bridge arm in the first motor controller and a winding in the first motor connected to the turned-on lower bridge arm, and the turned-on upper bridge arm in the second motor controller and a winding in the second motor connected to the turned-on upper bridge arm, and a loop among the battery, the turned-on lower bridge arm in the first motor controller and a winding in the first motor connected to the turned-on lower bridge arm, and the turned-on upper bridge arm in the first motor controller and a winding in the first motor connected to the turned-on upper bridge arm.

10. The method according to claim 8, wherein executing the first charging mode to form the first charging loop in the circuit where the battery is located comprises:
controlling all the turned-on upper bridge arms and the turned-on lower bridge arms during execution of the first discharging mode to be turned off,
wherein the formed first charging loop comprises the battery, a freewheeling diode of the lower bridge arm in the bridge arm where the turned-on upper bridge arm in the first discharging mode is located, a freewheeling diode of the upper bridge arm in the bridge arm where the turned-on lower bridge arm in the first discharging mode is located, and windings in the first motor and the second motor connected to the bridge arms to which the freewheeling diodes belong.

11. The method according to any one of claims 1 to 10, wherein forming the charging loop and the discharging loop that are alternately switched in the circuit where the battery is located further comprises:
forming the discharging loop, a freewheeling loop, and the charging loop that are alternately switched in the circuit where the battery is located, wherein the freewheeling loop comprises a winding of the first motor incorporated into the discharging loop and a winding of the second motor incorporated into the discharging loop.

12. The method according to claim 11, wherein forming the freewheeling loop in the circuit where the battery is located comprises:
controlling at least one of the currently turned-on bridge arm switches in the first motor controller and the second motor controller to be turned off to form the freewheeling loop between the winding of the first motor incorporated into the discharging loop and the winding of the second motor incorporated into the discharging loop, wherein in the freewheeling loop and the discharging loop, directions of currents flowing through the neutral line between the first motor and the second motor are the same.

13. The method according to any one of claims 1 to 7, wherein controlling the switching of the bridge arms in the first motor controller and the second motor controller to form the discharging loop in the circuit where the battery is located comprises:
controlling the upper bridge arms of all bridge arms in the first motor controller to be turned on, and controlling the lower bridge arms of all bridge arms in the second motor controller to be turned on, wherein the formed discharging loop comprises the battery, the upper bridge arms of all bridge arms in the first motor controller, all windings of the first motor, all windings of the second motor, and the lower bridge arms of all bridge arms in the second motor controller.

14. The method according to claim 13, wherein the method further comprises:
when charging of all windings of the first motor and all windings of the second motor by the battery in the discharging loop is completed, controlling all upper bridge arms of the first motor controller and all upper bridge arms of the second motor controller to be turned on to form a freewheeling loop among all upper bridge arms of the first motor controller, all windings of the first motor, all windings of the second motor, and all upper bridge arms of the second motor controller.

15. The method according to claim 13, wherein the method further comprises:
when charging of all windings of the first motor and all windings of the second motor by the battery in the discharging loop is completed, controlling all lower bridge arms of the first motor controller and all lower bridge arms of the second motor controller to be turned on to form a freewheeling loop among all lower bridge arms of the first motor controller, all windings of the first motor, all windings of the second motor, and all lower bridge arms of the second motor controller.

16. The method according to claim 14 or 15, wherein controlling the switching of the bridge arms in the first motor controller and the second motor controller to form the charging loop in the circuit where the battery is located comprises:
when freewheeling in the freewheeling loop ends, controlling the upper bridge arms of all bridge arms in the first motor controller to be turned off and the lower bridge arms of all the bridge arms to be turned on, and controlling the lower bridge arms of all bridge arms in the second motor controller to be turned off and the upper bridge arms of all the bridge arms to be turned on, wherein the formed charging loop comprises the battery, the lower bridge arms of all bridge arms in the first motor controller, all windings of the first motor, all windings of the second motor, and the upper bridge arms of all bridge arms in the second motor controller.

17. The method according to claim 14 or 15, wherein controlling the switching of the bridge arms in the first motor controller and the second motor controller to form the charging loop in the circuit where the battery is located comprises:
when freewheeling in the freewheeling loop ends, controlling the upper bridge arms of all bridge arms in the first motor controller to be turned off, and controlling the lower bridge arms of all bridge arms in the second motor controller to be turned off, wherein the formed charging loop comprises the battery, freewheeling diodes of the lower bridge arms of all bridge arms in the first motor controller, all windings of the first motor, all windings of the second motor, and freewheeling diodes of the upper bridge arms of all bridge arms in the second motor controller.

18. The method according to any one of claims 1 to 17, wherein the method further comprises:
when a heating stop condition is satisfied, controlling the connection circuit between the neutral point of the first motor and the neutral point of the second motor to be disabled.

19. A charge and discharge control apparatus, comprising:
a control module, configured to, when a battery heating condition is satisfied, activate a connection circuit between a neutral point of a first motor and a neutral point of a second motor, wherein a first motor controller connected to the first motor and a second motor controller connected to the second motor are both connected between a positive terminal and a negative terminal of a battery; and control switching of bridge arms in the first motor controller and the second motor controller to form a charging loop and a discharging loop that are alternately switched in a circuit where the battery is located.

20. An electric device, comprising a battery, a first motor, a second motor, a first motor controller, a second motor controller, a connection circuit, and the charge and discharge control apparatus according to claim 19,
wherein the first motor controller and the second motor controller are connected in parallel between a positive terminal and a negative terminal of the battery;
connection points of the upper and lower bridge arms of each bridge arm of the first motor controller are respectively connected to the windings of the first motor in a one-to-one correspondence manner, connection points of the upper and lower bridge arms of each bridge arm of the second motor controller are respectively connected to the windings of the second motor in a one-to-one correspondence manner, and the connection circuit is connected between a neutral point of the first motor and a neutral point of the second motor;
the charge and discharge control apparatus is connected to the connection circuit, the first motor controller, and the second motor controller.

21. A computing device comprising a memory, a processor, and a computer program stored in the memory and executable by the processor, wherein the processor executes the program to implement the method according to any one of claims 1 to 18.

22. A computer-readable storage medium having a computer program stored thereon, wherein the program, when executed by a processor, causes the processor to implement the method according to any one of claims 1 to 18.

23. A computer program product comprising a computer program, wherein the computer program, when executed by a processor, causes the processor to implement the method according to any one of claims 1 to 18.
